# EUROPEAN PATENT APPLICATION

(11) **EP 4 797 808 A1**
(43) Date of publication of application: **26.08.2026**
(21) Application number: 24884157.9
(22) Date of filing: 21.08.2024
(51) Int. Cl.: H04W 52/02

(54) **COMMUNICATION METHOD AND COMMUNICATION APPARATUS**

(30) Priority: 30.10.2023 CN 202311434527
(71) Applicant: HUAWEI TECHNOLOGIES CO., LTD., Shenzhen 518129 (CN)
(72) Inventor: XUAN, Yidi, Shenzhen, Guangdong 518129 (CN); GUAN, Lei, Shenzhen, Guangdong 518129 (CN); LI, Ruijie, Shenzhen, Guangdong 518129 (CN); WANG, Yi, Shenzhen, Guangdong 518129 (CN)
(74) Representative: Goddar, Heinz J.
(86) International application number: PCT/CN2024/113680
(87) International publication number: WO 2025/092150

(57) **Abstract**

Embodiments of this application provide a communication method and a communication apparatus. The method includes: Before sending a first signal, a first terminal device receives configuration information of a first cell from a first network device; based on this configuration information, the first terminal device determines whether to send the first signal, which is used to request a first common signal and/or a second common signal of the first cell. In embodiments of this application, the first terminal device does not send the first signal when the configuration information indicates that the first cell is barred and/or the first cell is not suitable for camping. This prevents resource waste that would result from unnecessarily triggering the transmission of the first common signal and/or the second common information of the first cell under such conditions.

## Description

This application claims priority to Chinese Patent Application No. 202311434527.0, filed with the China National Intellectual Property Administration on October 30, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With continuous advancement of communication systems, spectrums used for wireless communication are becoming wider, the number of transmit antennas at base stations is increasing, and power consumption is growing accordingly. Meanwhile, frequency bands used in network deployment are becoming higher, leading to smaller coverage areas and denser base stations deployments, which further increases power consumption of the entire network. For example, power consumption of a single 5th generation mobile communication technology (5th generation, 5G) base station is generally two to three times that of a typical 4th generation mobile communication technology (4th generation, 4G) base station. As a result, "low carbon" has gained increasing attention in communication networks, particularly regarding how to reduce energy consumption of base stations.

Base stations periodically send some common information to enable a terminal device to identify network devices and access a network. For a cell with no or low traffic requirement, the base stations are still required to periodically send common information, resulting in significant overhead. Currently, base stations may reduce power consumption by disabling some components (for example, a radio frequency channel, an intermediate frequency channel, and a baseband chip). However, during the period when the components are disabled, the base stations may be unable to transmit some common signals. Consequently, terminal devices attempting to access the network or initiate data transmission may face delays or failures.

Common signals include, for example, a synchronization signal and physical broadcast channel (physical broadcast channel, PBCH) block (synchronization signal and PBCH block, SSB), and a system information block 1 (system information block 1, SIB1). The SSB may be used by a terminal device to perform synchronization and obtain information related to cell access, and the SIB1 is used to evaluate whether the terminal device is allowed to access the cell and define scheduling details for other system messages.

To address this, some researchers have proposed that the base station may disable some components, and when a terminal device has communication requirements, it can send a wake-up signal to request the base station to send a SIB1 and/or an SSB. This avoids high power consumption caused by periodic transmission of the SIB1 and/or the SSB, thereby achieving energy saving at the base station.

However, ever if a terminal device sends a wake-up signal and attempts to receive a common signal from a target cell, it may still be unable to access the target cell, for example, if the target cell currently does not allow from terminal device access. In this case, sending the wake-up signal wastes terminal device resources and triggers unnecessary common signal transmissions from the base station, thereby increasing overall power consumption.

### SUMMARY

Embodiments of this application provide a communication method and a communication apparatus that support low carbon and energy saving for a network device.

To achieve the foregoing objective, the following technical solutions are used in this application.

According to a first aspect, a communication method is provided. The method may be performed by a first terminal device, may be performed by a component of the first terminal device, for example, a processor, a chip, or a chip system of the first terminal device, or may be implemented by a logical module or software that can implement all or some functions of the first terminal device. For example, the method may be performed by the first terminal device. The method includes: The first terminal device receives configuration information of a first cell; and the first terminal device determines, based on the configuration information of the first cell, whether to send a first signal, where the first signal is used to request a first common signal and/or a second common signal of the first cell.

According to the communication method provided in this embodiment of this application, the first terminal device receives the configuration information that is of the first cell and that is sent by a first network device, and the first terminal device may determine, based on the configuration information of the first cell, whether to send the first signal used to request the first common signal and/or the second common signal of the first cell. This prevents resource waste that would result from unnecessarily triggering the transmission of the first common signal and/or the second common information of the first cell in inappropriate cases. In other words, the communication method provided in this embodiment of this application helps achieve low carbon and energy saving for a network device.

In a possible implementation, the configuration information of the first cell includes first information and second information, the first information is used to determine whether the first cell is barred, and the second information is used to determine whether the first cell is suitable for camping. In this way, the first terminal device can determine, based on the first information and the second information, whether the first cell is barred and whether the first cell is suitable for camping.

In this embodiment of this application, that the first terminal device determines, based on the configuration information of the first cell, whether to send the first signal includes: The first terminal device determines to send the first signal when it is determined, based on the first information, that the first cell is not barred, and it is determined, based on the second information, that the first cell is suitable for camping. In this way, the first terminal device can send the first signal when determining that the first cell is not barred and is suitable for camping. This prevents resource waste that would result from unnecessarily triggering the transmission of the first common signal and/or the second common information of the first cell under such conditions.

In this embodiment of this application, the first information includes at least one of the following: information indicating one or more frequency bands to which one or more downlink carriers of the first cell belong; information indicating one or more frequency bands to which one or more uplink carriers of the first cell belong; information indicating an uplink carrier bandwidth of the first cell; information indicating a bandwidth of an uplink initial BWP of the first cell; information indicating a downlink carrier bandwidth of the first cell; information indicating a bandwidth of a downlink initial BWP of the first cell; and information indicating that the first cell requires the first terminal device to be capable of performing uplink transmission at an offset of 7.5 kHz relative to a long term evolution LTE raster (raster).

In this embodiment of this application, the first information includes the information indicating the one or more frequency bands to which the one or more downlink carriers of the first cell belong, and that the first terminal device determines, based on the first information, that the first cell is not barred includes: The first terminal device determines, based on a fact that at least one supported frequency band belongs to the one or more frequency bands to which the one or more downlink carriers of the first cell belong, that the first cell is not barred. In this way, the first terminal device can determine, based on a relationship between the one or more frequency bands to which the one or more downlink carriers of the first cell belong and the frequency band supported by the first terminal device, that the first cell is not barred.

In this embodiment of this application, the first information includes the information indicating the one or more frequency bands to which the one or more uplink carriers of the first cell belong, and that the first terminal device determines, based on the first information, that the first cell is not barred includes: The first terminal device determines, based on a fact that at least one supported frequency band belongs to the one or more frequency bands to which the one or more uplink carriers of the first cell belong, that the first cell is not barred. In this way, the first terminal device can determine, based on a relationship between the one or more frequency bands of the one or more uplink carriers of the first cell and the frequency band supported by the first terminal device, that the first cell is not barred.

In this embodiment of this application, the first information includes the information indicating the uplink carrier bandwidth of the first cell, and that the first terminal device determines, based on the first information, that the first cell is not barred includes: The first terminal device determines, based on a fact that a maximum transmission bandwidth of a supported uplink channel bandwidth is less than or equal to the uplink carrier bandwidth of the first cell, that the first cell is not barred. In this way, the first terminal device can determine, based on a relationship between the uplink carrier bandwidth of the first cell and the uplink channel bandwidth supported by the first terminal device, that the first cell is not barred.

In this embodiment of this application, the first information includes the information indicating the bandwidth of the uplink initial BWP of the first cell, and the first terminal device determines, based on the first information, that the first cell is not barred includes: The first terminal device determines, based on a fact that the maximum transmission bandwidth of the supported uplink channel bandwidth is greater than or equal to the bandwidth of the uplink initial BWP of the first cell, that the first cell is not barred. In this way, the first terminal device can determine, based on a relationship between the bandwidth of the uplink initial BWP of the first cell and the uplink channel bandwidth supported by the first terminal device, that the first cell is not barred.

In this embodiment of this application, the first information includes the information indicating the downlink carrier bandwidth of the first cell, and that the first terminal device determines, based on the first information, that the first cell is not barred includes: The first terminal device determines, based on a fact that a maximum transmission bandwidth of a supported downlink channel bandwidth is less than or equal to the downlink carrier bandwidth of the first cell, that the first cell is not barred. In this way, the first terminal device can determine, based on a relationship between the downlink carrier bandwidth of the first cell and the downlink channel bandwidth supported by the first terminal device, that the first cell is not barred.

In this embodiment of this application, the first information includes the information indicating the bandwidth of the downlink initial BWP of the first cell, and the first terminal device determines, based on the first information, that the first cell is not barred includes: The first terminal device determines, based on a fact that the maximum transmission bandwidth of the supported uplink channel bandwidth is greater than or equal to the bandwidth of the uplink initial BWP of the first cell, that the first cell is not barred. In this way, the first terminal device can determine, based on a relationship between the bandwidth of the downlink initial BWP of the first cell and the downlink channel bandwidth supported by the first terminal device, that the first cell is not barred.

In this embodiment of this application, the first information includes the information indicating that the first cell requires the first terminal device to be capable of performing uplink transmission at the offset of 7.5 kHz relative to the long term evolution LTE raster (raster), and that the first terminal device determines, based on the first information, that the first cell is not barred includes: The first terminal device determines, based on a fact that performing uplink transmission at the offset of 7.5 kHz relative to the long term evolution LTE raster (raster) is supported, that the first cell is not barred. In this way, the first terminal device can determine, based on information about whether to support performing uplink transmission at the offset of 7.5 kHz relative to the long term evolution LTE raster (raster), that the first cell is not barred.

In another possible implementation, the configuration information of the first cell includes second information, and the second information is used to determine whether the first cell is suitable for camping.

In this embodiment of this application, that the first terminal device determines, based on the configuration information of the first cell, whether to send the first signal includes: The first terminal device determines to send the first signal when it is determined, based on the second information, that the first cell is suitable for camping.

In this embodiment of this application, the second information includes at least one of the following: information about a public land mobile network of the first cell; information about a standalone non-public network of the first cell; and indication information used to determine whether the first cell satisfies a cell selection criterion. In this way, the first terminal device can determine, based on the second information, whether the first cell is suitable for camping.

In this embodiment of this application, the second information includes the information about the public land mobile network of the first cell, and that the first terminal device determines, based on the second information, that the first cell is suitable for camping includes: The first terminal device determines, based on a fact that a supported public land mobile network is the public land mobile network of the first cell, that the first cell is suitable for camping. In this way, the first terminal device can determine, based on a relationship between the public land mobile network of the first cell and the public land mobile network supported by the first terminal device, that the first cell is suitable for camping. This prevents resource waste that would result from unnecessarily triggering the transmission of the first common signal and/or the second common information of the first cell under such conditions.

In this embodiment of this application, the second information includes the information about the standalone non-public network of the first cell, and that the first terminal device determines, based on the second information, that the first cell is suitable for camping includes: The first terminal device determines, based on a fact that a supported standalone non-public network is the standalone non-public network of the first cell, that the first cell is suitable for camping. In this way, the first terminal device can determine, based on a relationship between the standalone non-public network of the first cell and the standalone non-public network supported by the first terminal device, that the first cell is suitable for camping.

In this embodiment of this application, the second information includes the indication information used to determine whether the first cell satisfies the cell selection criterion, and that the first terminal device determines, based on the second information, that the first cell is suitable for camping includes: The first terminal device determines, based on a fact that a cell selection RX level value Srxlev of the first cell is greater than 0 and that a cell selection quality value Squal of the first cell is greater than 0, that the first cell is suitable for camping. In this way, the first terminal device can determine, based on the cell selection RX level value Srxlev of the first cell and the cell selection quality value Squal of the first cell, that the first cell is suitable for camping.

In some embodiments, that the first terminal device receives the configuration information of the first cell includes: The first terminal device receives, in a second cell, the configuration information of the first cell. The configuration information of the first cell is sent in the second cell, so that the first cell does not need to send the configuration information of the first cell. This helps achieve energy saving for the first cell.

In this embodiment of this application, the configuration information of the first cell is included in a system message corresponding to the second cell.

In a possible implementation, both the first cell and the second cell are served by the first network device. In other words, a same network device serves the first cell and the second cell. The first network device is configured with the configuration information of the first cell, and may directly send the configuration information of the first cell to the first terminal device in a connected state when the first terminal device is connected to the second cell.

In another possible implementation, the first cell is served by a second network device, and the second cell is served by the first network device. The configuration information of the first cell is obtained by the first network device from the second network device; or the configuration information of the first cell is sent by the first network device. In other words, the first cell and the second cell are served by different network devices. After obtaining the configuration information of the first cell from the second network device, the first network device may send the configuration information of the first cell to the first terminal device in a connected state when the first terminal device is connected to the second cell.

In some embodiments, that the first terminal device receives the configuration information of the first cell includes: The first terminal device receives, in the first cell, the configuration information of the first cell.

For example, the configuration information of the first cell is carried in a first message, where the first message is periodically sent; or the first message is frequency-division multiplexed with the first common signal; or the first message is scheduled by using first indication information, where the first indication information is carried in the first common signal; or the first indication information is carried in a first physical downlink control channel PDCCH, and configuration of the first PDCCH is carried in the first common signal. In this way, the first terminal device can obtain the configuration information of the first cell in different manners.

In this embodiment of this application, the first common signal and/or the second common signal include/includes the configuration information of the first cell, and the first common signal and/or the second common signal further include/includes at least one of the following: scheduling information of other system information, counter configuration information, access control restriction information, and terminal resume identifier indication.

According to a second aspect, a communication method is provided. The method may be performed by a first network device, may be performed by a component of the first network device, for example, a processor, a chip, or a chip system of the first network device, or may be implemented by a logical module or software that can implement all or some functions of the first network device. For example, the method may be performed by the first network device. The method includes: The first network device sends configuration information of a first cell, where the configuration information of the first cell includes first information and second information, or the configuration information of the first cell includes the second information, where the first information is used to determine whether the first cell is barred, and the second information is used to determine whether the first cell is suitable for camping; the first network device receives a first signal, where the first signal is used to request a first common signal and/or a second common signal of the first cell; and the first network device sends the first common signal and/or the second common signal of the first cell.

According to the communication method provided in this embodiment of this application, a first terminal device receives the configuration information that is of the first cell and that is sent by the first network device, and the first terminal device may determine, based on at least one of the first information or the second information included in the configuration information of the first cell, whether to send the first signal used to request the first common signal and/or the second common signal. The first information is used to determine whether the first cell is barred, and the second information is used to determine whether the first cell is suitable for camping. When the first cell is barred and/or the first cell is not suitable for camping, the first signal is not sent. This prevents resource waste that would result from unnecessarily triggering the transmission of the first common signal and/or the second common information of the first cell under such conditions. In other words, the communication method provided in this embodiment of this application helps achieve low carbon and energy saving for a network device.

In this embodiment of this application, the first information includes at least one of the following: information indicating one or more frequency bands to which one or more downlink carriers of the first cell belong; information indicating one or more frequency bands to which one or more uplink carriers of the first cell belong; information indicating an uplink carrier bandwidth of the first cell; information indicating a downlink carrier bandwidth of the first cell; and information indicating that the first terminal device can perform uplink transmission at an offset of 7.5 kHz relative to a long term evolution LTE raster (raster).

In this embodiment of this application, the second information includes at least one of the following: information about a public land mobile network of the first cell; information about a standalone non-public network of the first cell; and indication information used to determine whether the first cell satisfies a cell selection criterion.

In a possible implementation, the configuration information of the first cell is included in a system message corresponding to a second cell. Both the first cell and the second cell are served by the first network device. In other words, a same network device serves the first cell and the second cell. The first network device is configured with the configuration information of the first cell, and may directly send the configuration information of the first cell to the first terminal device in a connected state when the first terminal device is connected to the second cell.

In another possible implementation, the first cell is served by a second network device, and the second cell is served by the first network device. The method further includes: The first network device receives the configuration information of the first cell from the second network device. In other words, the first cell and the second cell are served by different network devices. After obtaining the configuration information of the first cell from the second network device, the first network device may send the configuration information of the first cell to the first terminal device in a connected state when the first terminal device is connected to the second cell.

In still another possible implementation, the configuration information of the first cell is carried in a first message, where the first message is periodically sent; or the first message is frequency-division multiplexed with the first common signal; or the first message is scheduled by using first indication information, where the first indication information is carried in the first common signal; or the first indication information is carried in a first physical downlink control channel PDCCH, and configuration of the first PDCCH is carried in the first common signal. In this way, the first network device can send the configuration information of the first cell to the first terminal device in different manners.

In this embodiment of this application, the first common signal and/or the second common signal include/includes the configuration information of the first cell, and the first common signal and/or the second common signal further include/includes at least one of the following: scheduling information of other system information, counter configuration information, access control restriction information, and terminal resume identifier indication.

According to a third aspect, a communication apparatus is provided, to implement the foregoing methods. The communication apparatus may be the first terminal device in the first aspect, or an apparatus included in the first terminal device, for example, a chip. Alternatively, the communication apparatus may be the first network device in the second aspect, or an apparatus included in the first network device, for example, a chip.

The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing function.

In some possible designs, the communication apparatus may include a processing module and a communication module. The communication module may include an output module (or a sending module) and an input module (or a receiving module), respectively configured to implement output (or sending) and input (or receiving) functions in any one of the foregoing aspects and any possible design of the foregoing aspects. The processing module may be configured to implement a processing function in any one of the foregoing aspects and any possible design of the foregoing aspects.

Optionally, the communication apparatus further includes a storage module, configured to store program instructions and data.

According to a fourth aspect, a communication apparatus is provided, including at least one processor. The processor is configured to run a computer program or instructions, or is configured to cause, through a logic circuit, the communication apparatus to perform the method according to any one of the foregoing aspects. The communication apparatus may be the first terminal device in the first aspect, or an apparatus included in the first terminal device, for example, a chip. Alternatively, the communication apparatus may be the first network device in the second aspect, or an apparatus included in the first network device, for example, a chip.

In some possible designs, the communication apparatus further includes a memory, configured to store computer instructions and/or a configuration file of the logic circuit. Optionally, the memory is integrated with the processor, or the memory is independent of the processor.

In a possible design, the communication apparatus further includes a communication interface, configured to input and/or output a signal.

In some possible designs, the communication interface is an interface circuit, and is configured to read and write computer instructions. For example, the interface circuit is configured to receive computer-executable instructions (where the computer-executable instructions are stored in the memory, and may be directly read from the memory, or may be read via another device), and transmit the computer-executable instructions to the processor.

In some possible designs, the communication interface is configured to communicate with a module other than the communication apparatus.

In some possible designs, the communication apparatus may be a chip system. When the communication apparatus is the chip system, the chip system may include a chip, or may include a chip and another discrete device.

According to a fifth aspect, a communication apparatus is provided, including a logic circuit and an interface circuit. The interface circuit is configured to input information and/or output information. The logic circuit is configured to perform the method according to any one of the foregoing aspects, and perform processing and/or generate to-be-output information based on the input information. The communication apparatus may be the first terminal device in the first aspect, or an apparatus included in the first terminal device, for example, a chip. Alternatively, the communication apparatus may be the first network device in the second aspect, or an apparatus included in the first network device, for example, a chip.

It may be understood that when the communication apparatus provided in any one of the third aspect to the fifth aspect is a chip, the foregoing sending action/function may be understood as outputting information, and the foregoing receiving action/function may be understood as inputting information.

According to a sixth aspect, a computer-readable storage medium is provided. The computer-readable storage medium stores a computer program or instructions. When the computer program or the instructions are executed by a processor, the method according to any one of the foregoing aspects is performed.

According to a seventh aspect, a computer program product is provided. When the computer program product is executed by a processor, the method according to any one of the foregoing aspects is performed.

According to an eighth aspect, a communication apparatus is provided. The communication apparatus includes a module/unit configured to perform the method according to the first aspect or the second aspect.

According to a ninth aspect, a communication method is provided. The communication method includes the method according to the first aspect and the method according to the second aspect.

According to a tenth aspect, a communication system is provided, including a first terminal device and a first network device. The first network device is configured to send configuration information of a first cell to the first terminal device. The first terminal device is configured to receive the configuration information of the first cell from the first network device, and determine, based on the configuration information of the first cell, whether to send a first signal. The first signal is used to request a first common signal and/or a second common signal of the first cell.

In the communication system provided in this embodiment of this application, in a possible implementation, the configuration information of the first cell includes first information and second information, the first information is used to determine whether the first cell is barred, and the second information is used to determine whether the first cell is suitable for camping.

In the communication system provided in this embodiment of this application, that the first terminal device is configured to determine, based on the configuration information of the first cell, whether to send the first signal includes: The first terminal device determines to send the first signal when it is determined, based on the first information, that the first cell is not barred, and it is determined, based on the second information, that the first cell is suitable for camping.

In the communication system provided in this embodiment of this application, the first information includes at least one of the following: information indicating one or more frequency bands to which one or more downlink carriers of the first cell belong; information indicating one or more frequency bands to which one or more uplink carriers of the first cell belong; information indicating an uplink carrier bandwidth of the first cell; information indicating a bandwidth of an uplink initial BWP of the first cell; information indicating a downlink carrier bandwidth of the first cell; information indicating a bandwidth of a downlink initial BWP of the first cell; and information indicating that the first cell requires the first terminal device to be capable of performing uplink transmission at an offset of 7.5 kHz relative to a long term evolution LTE raster (raster).

In the communication system provided in this embodiment of this application, the first information includes the information indicating the one or more frequency bands to which the one or more downlink carriers of the first cell belong, and that the first terminal device is configured to determine, based on the first information, that the first cell is not barred includes: The first terminal device determines, based on a fact that at least one supported frequency band belongs to the one or more frequency bands to which the one or more downlink carriers of the first cell belong, that the first cell is not barred.

In the communication system provided in this embodiment of this application, the first information includes the information indicating the one or more frequency bands to which the one or more uplink carriers of the first cell belong, and that the first terminal device is configured to determine, based on the first information, that the first cell is not barred includes: The first terminal device is configured to determine, based on a fact that at least one supported frequency band belongs to the one or more frequency bands to which the one or more uplink carriers of the first cell belong, that the first cell is not barred.

In the communication system provided in this embodiment of this application, the first information includes the information indicating the uplink carrier bandwidth of the first cell, and that the first terminal device is configured to determine, based on the first information, that the first cell is not barred includes: The first terminal device determines, based on a fact that a maximum transmission bandwidth of a supported uplink channel bandwidth is less than or equal to the uplink carrier bandwidth of the first cell, that the first cell is not barred.

In the communication system provided in this embodiment of this application, the first information includes the information indicating the bandwidth of the uplink initial BWP of the first cell, and that the first terminal device is configured to determine, based on the first information, that the first cell is not barred includes: The first terminal device determines, based on a fact that the maximum transmission bandwidth of the supported uplink channel bandwidth is greater than or equal to the bandwidth of the uplink initial BWP of the first cell, that the first cell is not barred.

In the communication system provided in this embodiment of this application, the first information includes the information indicating the downlink carrier bandwidth of the first cell, and that the first terminal device is configured to determine, based on the first information, that the first cell is not barred includes: The first terminal device determines, based on a fact that a maximum transmission bandwidth of a supported downlink channel bandwidth is less than or equal to the downlink carrier bandwidth of the first cell, that the first cell is not barred.

In the communication system provided in this embodiment of this application, the first information includes the information indicating the bandwidth of the downlink initial BWP of the first cell, and that the first terminal device is configured to determine, based on the first information, that the first cell is not barred includes: The first terminal device determines, based on a fact that the maximum transmission bandwidth of the supported uplink channel bandwidth is greater than or equal to the bandwidth of the uplink initial BWP of the first cell, that the first cell is not barred.

In the communication system provided in this embodiment of this application, the first information includes the information indicating that the first cell requires the first terminal device to be capable of performing uplink transmission at the offset of 7.5 kHz relative to the long term evolution LTE raster (raster), and that the first terminal device is configured to determine, based on the first information, that the first cell is not barred includes: The first terminal device determines, based on a fact that performing uplink transmission at the offset of 7.5 kHz relative to the long term evolution LTE raster (raster) is supported, that the first cell is not barred.

In the communication system provided in this embodiment of this application, in another possible implementation, the configuration information of the first cell includes second information, and the second information is used to determine whether the first cell is suitable for camping.

In the communication system provided in this embodiment of this application, that the first terminal device is configured to determine, based on the configuration information of the first cell, whether to send the first signal includes: The first terminal device determines to send the first signal when it is determined, based on the second information, that the first cell is suitable for camping.

In the communication system provided in this embodiment of this application, the second information includes at least one of the following: information about a public land mobile network of the first cell; information about a standalone non-public network of the first cell; and indication information used to determine whether the first cell satisfies a cell selection criterion.

In the communication system provided in this embodiment of this application, the second information includes the information about the public land mobile network of the first cell, and that the first terminal device is configured to determine, based on the second information, that the first cell is suitable for camping includes: The first terminal device determines, based on a fact that a supported public land mobile network is the public land mobile network of the first cell, that the first cell is suitable for camping.

In the communication system provided in this embodiment of this application, the second information includes the information about the public land mobile network of the first cell, and that the first terminal device is configured to determine, based on the second information, that the first cell is suitable for camping includes: The first terminal device determines, based on a fact that a supported standalone non-public network is the standalone non-public network of the first cell, that the first cell is suitable for camping.

In the communication system provided in this embodiment of this application, the second information includes the indication information used to determine whether the first cell satisfies the cell selection criterion, and that the first terminal device is configured to determine, based on the second information, that the first cell is suitable for camping includes: The first terminal device determines, based on a fact that a cell selection RX level value Srxlev of the first cell is greater than 0 and that a cell selection quality value Squal of the first cell is greater than 0, that the first cell is suitable for camping.

In the communication system provided in this embodiment of this application, in a possible implementation, that the first terminal device is configured to receive the configuration information of the first cell includes: The first terminal device is configured to receive, in a second cell, the configuration information of the first cell. The configuration information of the first cell is included in a system message corresponding to the second cell.

In a possible implementation, both the first cell and the second cell are served by the first network device.

In another possible implementation, the communication system provided in this embodiment of this application further includes a second network device. The first cell is served by the second network device, and the second cell is served by the first network device. The second network device is configured to send the configuration information of the first cell to the first network device. The first network device is configured to receive the configuration information of the first cell from the second network device.

In the communication system provided in this embodiment of this application, in another possible implementation, that the first terminal device is configured to receive the configuration information of the first cell includes: The first terminal device is configured to receive, in the first cell, the configuration information of the first cell. The configuration information of the first cell is carried in a first message, where the first message is periodically sent; or the first message is frequency-division multiplexed with the first common signal; or the first message is scheduled by using first indication information, where the first indication information is carried in the first common signal; or the first indication information is carried in a first physical downlink control channel PDCCH, and configuration of the first PDCCH is carried in the first common signal.

In the communication system provided in this embodiment of this application, when the first common signal and/or the second common signal include/includes the configuration information of the first cell, the communication system further includes at least one of the following: a second terminal device, where the second terminal device is configured to: receive the first common signal and/or the second common signal from the first network device, and access the first cell based on the first common signal and/or the second common signal.

For technical effects brought by any design manner of the tenth aspect, refer to technical effects brought by different design manners of the first aspect or the second aspect. Details are not described herein again.

### BRIEF DESCRIPTION OF DRAWINGS

FIG. 1 is a diagram of an architecture of a communication system according to an embodiment of this application;
FIG. 2 is a diagram of a structure of a communication apparatus 200 according to an embodiment of this application;
FIG. 3 is a diagram of an example of a communication method according to an embodiment of this application;
FIG. 4 is a diagram of another example of a communication method according to an embodiment of this application;
FIG. 5 is a diagram in which a first terminal device receives, in a second cell, configuration information of a first cell according to this application;
FIG. 6 is a diagram of an example in which a first terminal device receives, in a second cell, configuration information of a first cell;
FIG. 7 is a diagram of another example in which a first terminal device receives, in a second cell, configuration information of a first cell;
FIG. 8 is a diagram of still another example in which a first terminal device receives, in a second cell, configuration information of a first cell;
FIG. 9 is a diagram of still another example of a communication method according to an embodiment of this application;
FIG. 10 is a diagram in which a first terminal device receives, in a first cell, configuration information of the first cell according to an embodiment of this application; and
FIG. 11 is a diagram of a communication apparatus according to an embodiment of this application.

### DESCRIPTION OF EMBODIMENTS

In descriptions of this application, unless otherwise specified, "/" indicates that associated objects are in an "or" relationship. For example, A/B may represent A or B. In this application, "and/or" merely describes only an association relationship between associated objects and indicates that three relationships may exist. For example, A and/or B may represent the following three cases: Only A exists, both A and B exist, and only B exists, where A and B may be singular or plural.

In the descriptions of this application, unless otherwise specified, "a plurality of" means two or more than two. "At least one of the following items (pieces)" or a similar expression thereof refers to any combination of these items, including a single item (piece) or any combination of a plurality of items (pieces). For example, at least one item (piece) of a, b, and (or) c may indicate a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that, an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that, in various embodiments of this application, sequence numbers of processes do not mean execution sequences. The execution sequences of the processes should be determined based on functions and internal logic of the processes, and should not be construed as any limitation on implementation processes of embodiments of this application.

It may be understood that, in this application, both "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

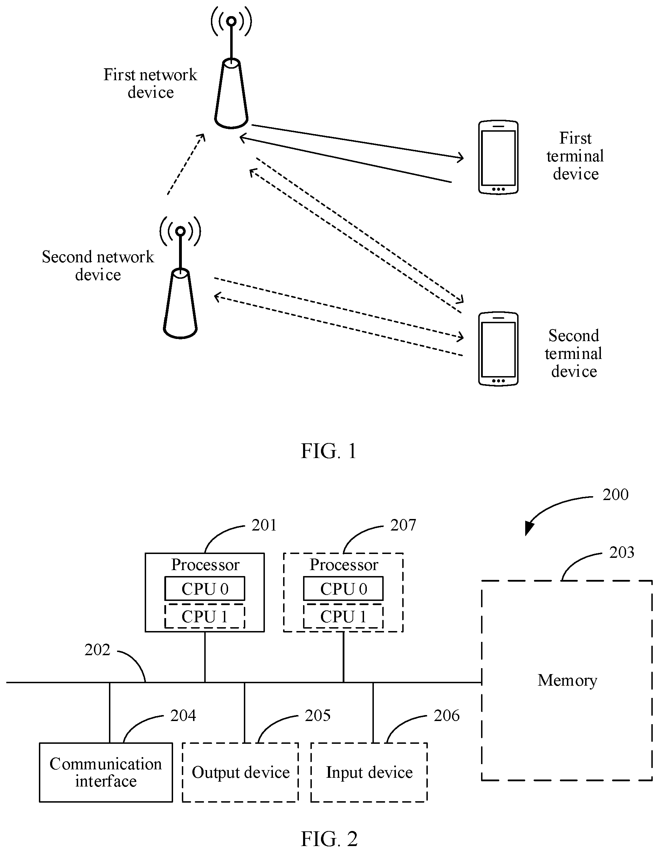

FIG. 1 is a diagram of an architecture of a communication system according to an embodiment of this application. As shown in FIG. 1, the communication system includes a first terminal device and a first network device.

The first network device is an entity that transmits or receives a signal, and is configured to send configuration information of a first cell to the first terminal device.

The first terminal device is an entity that receives or transmits a signal, and is configured to receive the configuration information of the first cell from the first network device.

Optionally, the communication system in this embodiment of this application further includes a second network device, configured to send the configuration information of the first cell to the first network device. Optionally, the communication system in this embodiment of this application further includes a second terminal device, configured to receive a first common signal and/or a second common signal from the first network device.

Optionally, embodiments of this application may be applied to a 5G system (which may also be referred to as an NR system), or may be applied to another communication system, for example, a future 6th generation mobile communication technology (6th generation, 6G). This is not specifically limited in embodiments of this application.

Optionally, the first terminal device or the second terminal device in this application may be user equipment (user equipment, UE), an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device with a wireless communication function, a compute device, another processing device connected to a wireless modem, a vehicle-mounted device, a vehicle-mounted transceiver unit, or a wearable device in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a vehicle-mounted device, an unmanned aerial vehicle, a robot, a smart point of sale (point of sale, POS) machine, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in an internet of things (internet of things, IoT), for example, a terminal (for example, an internet of vehicles device) in V2X, a terminal in device-to-device (device-to-device, D2D) communication, or a terminal in machine-to-machine (machine-to-machine, M2M) communication. The terminal may be mobile or fixed.

Optionally, the first network device or the second network device in this application may be an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario; may include a next generation NodeB (next generation NodeB, gNB) in a new radio (new radio, NR) system; may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like; or may include a base station in a non-terrestrial network (non-terrestrial network, NTN), that is, may be deployed on an airplane platform or a satellite. In the NTN, a network device or an access device may be used as a layer 1 (L1) relay (relay), may be used as a base station, or may be used as an integrated access and backhaul (integrated access and backhaul, IAB) node. Alternatively, the first network device may be a device that is in an IoT and that implements functions of a base station, for example, a device that is in unmanned aerial vehicle communication, V2X, D2D, or machine-to-machine (machine-to-machine, M2M) and that implements the functions of the base station.

In some possible scenarios, the first network device and the second network device may alternatively be modules or units that can implement some functions of the base station. For example, the first network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the first network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

It may be understood that the foregoing function may be a network element in a hardware device, a software function running on dedicated hardware, a combination of hardware and software, or a virtualization function instantiated on a platform (for example, a cloud platform).

For example, related functions of the first terminal device, the second terminal device, the first network device, and the second network device in this application may be implemented by using the communication apparatus 200 in FIG. 2. FIG. 2 is a diagram of a structure of a communication apparatus 200 according to an embodiment of this application. The communication apparatus 200 includes one or more processors 201, a communication line 202, and at least one communication interface (in FIG. 2, an example in which a communication interface 204 and one processor 201 are included is merely used for description). Optionally, the communication apparatus 200 may further include a memory 203.

The processor 201 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 202 may include a path for connecting different components.

The communication interface 204 may be a transceiver module, configured to communicate with another device or a communication network, for example, an Ethernet, a RAN, or a wireless local area network (wireless local area network, WLAN). For example, the transceiver module may be an apparatus like a transceiver or a transceiver machine. Optionally, the communication interface 204 may alternatively be a transceiver circuit located in the processor 201, and is configured to implement signal input and signal output of the processor.

The memory 203 may be an apparatus with a storage function. For example, the memory 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through the communication line 202. The memory may alternatively be integrated with the processor.

The memory 203 is configured to store computer-executable instructions for executing the solutions in this application, and the processor 201 controls the execution. The processor 201 is configured to execute the computer-executable instructions stored in the memory 203, to implement the communication method provided in embodiments of this application.

Alternatively, optionally, in this embodiment of this application, the processor 201 may perform processing-related functions in the communication method provided in the following embodiments of this application. The communication interface 204 is responsible for communicating with another device or a communication network. This is not specifically limited in embodiments of this application.

Optionally, the computer-executable instructions in this embodiment of this application may also be referred to as application program code. This is not specifically limited in embodiments of this application.

During specific implementation, in an embodiment, the processor 201 may include one or more CPUs, for example, a CPU 0 and a CPU 1 in FIG. 2.

During specific implementation, in an embodiment, the communication apparatus 200 may include a plurality of processors, for example, a processor 207 and the processor 201 in FIG. 2. Each of the processors may be a single-core (single-core) processor, or may be a multi-core (multi-core) processor. The processor herein may include but is not limited to at least one of the following: various compute devices that run software, such as a central processing unit (central processing unit, CPU), a microprocessor, a digital signal processor (DSP), a microcontroller unit (microcontroller unit, MCU), or an artificial intelligence processor. Each compute device may include one or more cores for executing software instructions to perform an operation or processing.

During specific implementation, in an embodiment, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, a sensor device.

The communication apparatus 200 may also be referred to as a communication apparatus sometimes, and may be a general-purpose device or a dedicated device. For example, the communication apparatus 200 may be a desktop computer, a portable computer, a network server, a palmtop computer (personal digital assistant, PDA), a mobile phone, a tablet computer, a wireless terminal device, an embedded device, the foregoing terminal, the foregoing network device, or a device having a structure similar to that in FIG. 2. A type of the communication apparatus 200 is not limited in this embodiment of this application.

In addition, the composition structure shown in FIG. 2 does not constitute a limitation on the communication apparatus. In addition to the components shown in FIG. 2, the communication apparatus may include more or fewer components than components shown in the figure, combine some components, or have different component arrangements.

The following describes the communication method provided in embodiments of this application with reference to the communication system shown in FIG. 1.

It should be noted that, in the following embodiments of this application, a name of a message between network elements, a name of each parameter, a name of each piece of information, or the like is merely an example, and may be another name in another embodiment. This is not specifically limited in the communication method provided in this application.

It may be understood that, in embodiments of this application, each network element may perform some or all of the steps in embodiments of this application. These steps or operations are merely examples. In embodiments of this application, other operations or various variations of the operations may be further performed. In addition, the steps may be performed in a sequence different from that presented in embodiments of this application, and not all the operations in embodiments of this application may be necessarily performed.

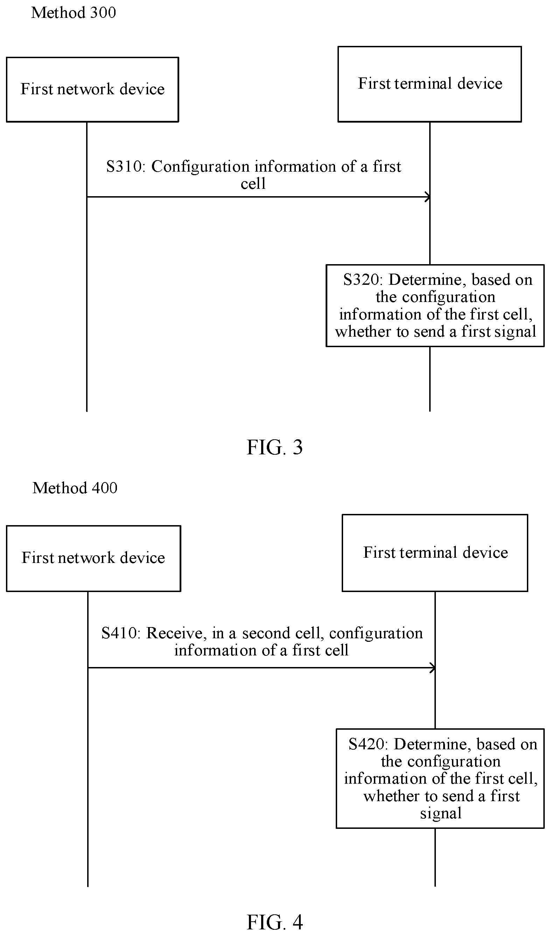

FIG. 3 is an example of a communication method according to an embodiment of this application. The method is described by using an example in which a first terminal device interacts with a first network device. Certainly, an action of the first terminal device in the method may alternatively be performed by an apparatus/module in the first terminal device, for example, a chip, a processor, or a processing unit in the first terminal device. An action of the first network device in the method may alternatively be performed by an apparatus/module in the first network device, for example, a chip, a processor, or a processing unit in the network device. This is not specifically limited in embodiments of this application. In this embodiment of this application, processing performed by a single execution body (for example, the first terminal device or the first network device) may alternatively be performed by a plurality of execution bodies, and these execution bodies may be logically and/or physically separated. For example, processing performed by the first network device may be performed by at least one of a CU, a DU, and an RU.

The following describes in detail some terms in this application.

### (1) Common signal

The common signal may be referred to as common information or non-dedicated information, or may be understood as information sent by one communication device to a plurality of communication devices. Downlink communication is used as an example. The common information may be understood as information sent by a network device to a plurality of terminal devices or a terminal device group in a cell, may be understood as information that is not specifically sent by the network device to a terminal device or a terminal device group in a cell, or may be understood as information that can be jointly used by a plurality of terminal devices or a terminal device group in a cell. For example, the common information may be system information, a synchronization signal, or a paging message.

The common signal may be used, for example, by a terminal device to perform procedures such as cell identification, initial access to a cell, neighboring cell measurement, or cell handover.

### (2) Common signal of a first cell

The common signal of the first cell may also be understood as a common signal corresponding to the first cell. The common signal corresponding to the first cell may include a first common signal and/or a second common signal. The first common signal corresponding to the first cell is used by the first terminal device to perform synchronization and obtain information related to the first cell. The second common signal corresponding to the first cell is used to evaluate whether the first terminal device is allowed to access the first cell and define scheduling of another system message.

### (3) Energy saving of a network device (base station)

A network device needs to periodically send some common information to enable a terminal device to identify the network device and access a network. For a cell with no or low traffic requirement, the network device is still required to periodically send common information, resulting in significant overhead. In a possible energy saving manner, the network device may disable some components (for example, a radio frequency channel, an intermediate frequency channel, and a baseband chip) to reduce signal transmission and implement energy saving. However, in this manner, if the network device is unable to transmit some common signals, the terminal device cannot access the network when they have traffic requirements. In view of this, in a possible manner, the terminal device may send a wake-up signal to trigger the network device to send a corresponding common signal, facilitating the terminal device to obtain access information. However, if the terminal device sends a wake-up signal to wake up the network device to send a common signal of a target cell, and the terminal device determines, based on the common signal, that the target cell is inaccessible, this results in resource waste for both the terminal device and the network device.

Based on the foregoing analysis, this application provides a communication method. A new interaction procedure is designed, so that the first terminal device can first obtain configuration information of the first cell, to determine whether to trigger the first network device to send a common signal.

For example, as shown in FIG. 3, the method 300 includes the following steps.

S310: The first network device sends configuration information of a first cell to the first terminal device, and the first terminal device receives this information accordingly.

In a possible implementation, the configuration information of the first cell includes first information and second information. In this embodiment of this application, the first information is used to determine whether the first cell is barred, and the second information is used to determine whether the first cell is suitable for camping. Alternatively, the first information is a parameter indicating whether the first cell is barred, and the second information is a parameter indicating whether the first cell is suitable for camping. Alternatively, the first terminal device may determine, based on a parameter in the first information, whether the first cell is barred, and the first terminal device may determine, based on a parameter in the second information, whether the first cell is suitable for camping. In this implementation, the first terminal device may first obtain the first information and the second information, and determine, based on the first information and the second information, whether to send a first signal.

In this implementation, the first terminal device determines, based on the first information and the second information, whether the first cell is barred and whether the first cell is suitable for camping. If the first terminal device determines that the first cell is not barred and is suitable for camping, the first terminal device then wakes up the first cell, or the first terminal device requests transmission of a common signal (for example, a first common signal and/or a second common signal) of the first cell. This prevents the terminal device from unnecessarily waking up a cell or triggering common signal transmissions from a cell that is barred or unsuitable for camping, thereby conserving energy of the first network device. It may be understood that, in this implementation, the first information and the second information are necessary information for implementing the foregoing procedure. In this embodiment of this application, for descriptions of the first signal, refer to the following step S320. Details are not described herein.

In another possible implementation, the configuration information of the first cell includes second information. The configuration information of the first cell may not include first information. In this embodiment of this application, the second information is used to determine whether the first cell is suitable for camping. Alternatively, the second information is a parameter indicating whether the first cell is suitable for camping. Alternatively, the first terminal device may determine, based on a parameter in the second information, whether the first cell is suitable for camping. Optionally, when the configuration information of the first cell includes the second information, the first terminal device considers by default that the first cell is not barred. In other words, when the configuration information of the first cell does not include the first information, the first terminal device considers by default that the first cell is not barred. In this implementation, the first terminal device may first obtain the second information, and determine, based on the second information, whether to send a first signal.

In this implementation, the first terminal device determines, based on the second information, whether the first cell is suitable for camping. If the first terminal device determines that the first cell is suitable for camping, the first terminal device wakes up the first cell or requests transmission of a common signal of the first cell. This prevents the terminal device from unnecessarily waking up a cell or triggering common signal transmissions from a cell that is barred or unsuitable for camping, thereby conserving energy of the first network device. Further, because the first terminal device considers by default that the first cell is not barred, the first terminal device does not need to determine whether the first cell is barred. Therefore, an implementation procedure of the first terminal device is simplified. It may be understood that, in this implementation, the second information is necessary information for implementing the foregoing procedure.

In still another possible implementation, the configuration information of the first cell includes first information. The configuration information of the first cell may not include second information. In this embodiment of this application, the first information is used to determine whether the first cell is barred. Alternatively, the first information is a parameter indicating whether the first cell is barred. Alternatively, the first terminal device may determine, based on a parameter in the first information, whether the first cell is barred. Optionally, in this implementation, the first terminal device may obtain the second information after receiving a common signal (for example, a first common signal and a second common signal, or the second common signal) triggered by a first signal. The second information may be carried in the common signal (for example, the second common signal). In this implementation, the first terminal device may first obtain the first information, and determine, based on the first information, whether to send the first signal.

In this implementation, the first terminal device determines, based on the first information, whether the cell is barred. If the first terminal device determines that the first cell is not barred, the first terminal device wakes up the first cell, or the first terminal device requests transmission of the common signal of the first cell. Therefore, before sending the first signal, the first terminal device determines whether the first cell is barred. This prevents the terminal device from unnecessarily waking up a cell that is barred or unsuitable for camping, thereby conserving energy of the first network device. Further, after receiving the common signal, the first terminal device may obtain the second information. The second information may be included in the common signal. The first terminal device determines, based on the second information, whether the first cell is suitable for camping, and determines, based on a determining result, whether to camp on the first cell. It should be understood that, in this implementation, the first cell may correspond to a carrier on which the first terminal device camps with a high probability, for example, a low-frequency carrier. After determining, based on the first information, that the first cell is not barred, the first terminal device camps on the first cell with a high probability. Therefore, before sending the first signal, the first terminal device does not need to perform camping determining. This reduces complexity of determining, by the first terminal device before sending the first signal, whether the first cell is suitable for camping. It may be understood that, in this implementation, the first information is necessary information for implementing the foregoing procedure.

In this embodiment of this application, the first information includes at least one of the following: information indicating one or more frequency bands to which one or more downlink carriers of the first cell belong; information indicating one or more frequency bands to which one or more uplink carriers of the first cell belong; information indicating an uplink carrier bandwidth of the first cell; information indicating a bandwidth of an uplink initial bandwidth part (bandwidth part, BWP) of the first cell; information indicating a downlink carrier bandwidth of the first cell; information indicating a bandwidth of a downlink initial BWP of the first cell; and information indicating that the first cell requires the first terminal device to be capable of performing uplink transmission at an offset of 7.5 kHz relative to an LTE raster (raster). Alternatively, the first information may include other information used to determine whether the first cell is barred. This is not limited in this embodiment of this application.

In this embodiment of this application, the second information includes at least one of the following: information about a public land mobile network (public land mobile network, PLMN) of the first cell; information about a standalone non-public network (standalone non-public network, SNPN) of the first cell; and indication information used to determine whether the first cell satisfies a cell selection criterion (a cell selection criterion S). Alternatively, the second information may include other information used to determine whether the first cell is suitable for camping. This is not limited in this embodiment of this application.

Optionally, the configuration information of the first cell further includes configuration information of the first signal. In a possible implementation, the first signal may be a random access preamble (preamble), a message 1 (MSG1), or a physical random access channel (physical random access channel, PRACH). This is not limited in this embodiment of this application. Correspondingly, the configuration information of the first signal may include configuration information of a PRACH resource. In another possible case, the first signal may be a physical uplink control channel (physical uplink control channel, PUCCH). For example, the first signal may be a PUCCH used for a scheduling request (scheduling request, SR). Correspondingly, the configuration information of the first signal may include configuration information of a PUCCH resource.

S320: The first terminal device determines, based on the configuration information of the first cell, whether to send the first signal.

In this embodiment of this application, the first signal is used to request the first common signal and/or the second common signal corresponding to the first cell; or the first signal is used to wake up a network device that sends the first common signal and/or the second common signal; or the first signal is used to request a network device serving the first cell to send the first common signal and/or the second common signal; or the first signal is used to wake up the first cell for transmitting the first common signal and/or the second common signal. This is not limited in this embodiment of this application. It should be understood that, before the first terminal device sends the first signal used to request the first common signal and/or the second common signal corresponding to the first cell, the first cell is not woken up, or the network device serving the first cell does not send the first common signal and/or the second common signal. It should be understood that the first common signal and/or the second common signal are/is used by the first terminal device to access the first cell.

In this embodiment of this application, the first common signal and/or the second common signal may include at least one of the following: scheduling information of other system information, counter configuration information, access control restriction information, terminal resume identifier indication, or other common information. This is not limited in this embodiment of this application. In a possible implementation, the first common signal and/or the second common signal may not include the configuration information that is of the first cell and that is described in step S310. To be specific, before sending the first signal, the first terminal device has obtained the configuration information that is of the first cell and that is described in step S310. Therefore, the first terminal device does not need to obtain the configuration information of the first cell again after sending the first signal. In this way, a payload of the first common signal and/or a payload of the second common signal can be reduced, thereby helping improve a coverage capability of the first common signal and/or a coverage capability of the second common signal. It should be understood that, a smaller payload of the first common signal and/or a smaller payload of the second common signal indicate/indicates a lower modulation order and a lower coding rate that can be used, and a better coverage capability of the first common signal and/or a better coverage capability of the second common signal. In this manner, the first common signal and/or the second common signal may be referred to as a lightweight first common signal and/or a lightweight second common signal, or may be a first common signal and/or a second common signal used in an energy-saving mode. In contrast, there is a conventional first common signal and/or a conventional second common signal, and transmission of the conventional first common signal and/or the conventional second common signal may be performed in a non-energy-saving mode. The conventional first common signal and/or the conventional second common signal include/includes the configuration information that is of the first cell and that is described in step S310.

In another possible implementation, the first common signal and/or the second common signal may include the configuration information that is of the first cell and that is described in step S310. When the first common signal and/or the second common signal include/includes the configuration information of the first cell, the first common signal and/or the second common signal may be further used by another terminal device, for example, a second terminal device, to access the first cell.

In this embodiment of this application, the first common signal may include a primary synchronization signal and/or a secondary synchronization signal; or the first common signal may be an SSB; or the first common signal may be a common signal of another version. This is not limited in this embodiment of this application. In this embodiment of this application, the second common signal carries system information; or the second common signal carries remaining minimum system information; or the second common signal is a system information block (system information block, SIB) SIB1; or the second common signal may be a common signal of another version. This is not limited in this embodiment of this application.

In some embodiments, the configuration information of the first cell includes the first information and the second information, and that the first terminal device determines, based on the configuration information of the first cell, whether to send the first signal includes the following several possible implementations.

In a possible implementation, the first terminal device determines to send the first signal when it is determined, based on the first information, that the first cell is not barred, and it is determined, based on the second information, that the first cell is suitable for camping.

In another possible implementation, the first terminal device determines not to send the first signal when it is determined, based on the first information, that the first cell is not barred, and it is determined, based on the second information, that the first cell is not suitable for camping.

In still another possible implementation, the first terminal device determines not to send the first signal when it is determined, based on the first information, that the first cell is barred, and it is determined, based on the second information, that the first cell is not suitable for camping.

In this embodiment of this application, the first terminal device may first determine whether the first cell is barred; and when the first cell is not barred, determine whether the first cell is suitable for camping. When determining that the first cell is barred, the first terminal device does not need to determine whether the first cell is suitable for camping, and may directly determine not to send the first signal.

In some embodiments, the configuration information of the first cell includes the second information, and that the first terminal device determines, based on the configuration information of the first cell, whether to send the first signal includes the following several possible implementations.

In a possible implementation, the first terminal device determines to send the first signal when it is determined, based on the second information, that the first cell is suitable for camping.

In another possible implementation, the first terminal device determines not to send the first signal when it is determined, based on the second information, that the first cell is not suitable for camping.

In some embodiments, the configuration information of the first cell includes the first information, and that the first terminal device determines, based on the configuration information of the first cell, whether to send the first signal includes the following several possible implementations.

In a possible implementation, the first terminal device determines to send the first signal when it is determined, based on the first information, that the first cell is not barred.

In another possible implementation, the first terminal device determines not to send the first signal when it is determined, based on the second information, that the first cell is barred.

In this embodiment of this application, the following lists several examples of determining, by the first terminal device based on the first information, that the first cell is not barred.

Example 1: The first information includes the information indicating the one or more frequency bands to which the one or more uplink carriers of the first cell belong, and that the first terminal device determines, based on the first information, that the first cell is not barred includes: The first terminal device determines, based on a fact that at least one frequency band supported by the first terminal device belongs to the one or more frequency bands to which the one or more uplink carriers of the first cell belong, that the first cell is not barred. For example, an uplink carrier 1 of the first cell belongs to a frequency band 1, an uplink carrier 2 of the first cell belongs to a frequency band 2, and the frequency band supported by the first terminal device includes the frequency band 1. In this case, the first terminal device may determine that the first cell is not barred.

Example 2: The first information includes the information indicating the one or more frequency bands to which the one or more downlink carriers of the first cell belong, and that the first terminal device determines, based on the first information, that the first cell is not barred includes: The first terminal device determines, based on a fact that at least one frequency band supported by the first terminal device belongs to the one or more frequency bands to which the one or more downlink carriers of the first cell belong, that the first cell is not barred. For example, a downlink carrier 3 of the first cell belongs to a frequency band 3, a downlink carrier 4 of the first cell belongs to a frequency band 4, and the frequency band supported by the first terminal device includes the frequency band 4. In this case, the first terminal device may determine that the first cell is not barred.

Example 3: The first information includes the information indicating the uplink carrier bandwidth of the first cell, and that the first terminal device determines, based on the first information, that the first cell is not barred includes: The first terminal device determines, based on a fact that a maximum transmission bandwidth of an uplink channel bandwidth supported by the first terminal device is less than or equal to the uplink carrier bandwidth of the first cell, that the first cell is not barred. For example, the maximum transmission bandwidth of the uplink channel bandwidth supported by the first terminal device is 5 MHz, and the uplink carrier bandwidth of the first cell is 8 MHz. In this case, the first terminal device may determine that the first cell is not barred.

Example 4: The first information includes the information indicating the bandwidth of the uplink initial BWP of the first cell, and that the first terminal device determines, based on the first information, that the first cell is not barred includes: The first terminal device determines, based on a fact that a maximum transmission bandwidth of an uplink channel bandwidth supported by the first terminal device is greater than or equal to the bandwidth of the uplink initial BWP of the first cell, that the first cell is not barred. For example, the maximum transmission bandwidth of the uplink channel bandwidth supported by the first terminal device is 9 MHz, and the bandwidth of the uplink initial BWP of the first cell is 6 MHz. In this case, the first terminal device may determine that the first cell is not barred.

Example 5: The first information includes the information indicating the downlink carrier bandwidth of the first cell, and that the first terminal device determines, based on the first information, that the first cell is not barred includes: The first terminal device determines, based on a fact that a maximum transmission bandwidth of a downlink channel bandwidth supported by the first terminal device is less than or equal to the downlink carrier bandwidth of the first cell, that the first cell is not barred. For example, the maximum transmission bandwidth of the downlink channel bandwidth supported by the first terminal device is 5 MHz, and the downlink carrier bandwidth of the first cell is 8 MHz. In this case, the first terminal device may determine that the first cell is not barred.

Example 6: The first information includes the information indicating the bandwidth of the downlink initial BWP of the first cell, and that the first terminal device determines, based on the first information, that the first cell is not barred includes: The first terminal device determines, based on a fact that the maximum transmission bandwidth of the downlink channel bandwidth supported by the first terminal device is greater than or equal to the bandwidth of the uplink initial BWP of the first cell, that the first cell is not barred. For example, the maximum transmission bandwidth of the downlink channel bandwidth supported by the first terminal device is 9 MHz, and the bandwidth of the downlink initial BWP of the first cell is 6 MHz, the first terminal device may determine that the first cell is not barred.

Example 7: The first information includes the information indicating that the first cell requires the first terminal device to be capable of performing uplink transmission at the offset of 7.5 kHz relative to the LTE raster (raster), and that the first terminal device determines, based on the first information, that the first cell is not barred includes: The first terminal device determines, based on a fact that performing uplink transmission at the offset of 7.5 kHz relative to the LTE raster (raster) is supported, that the first cell is not barred.

It should be understood that the foregoing Example 1 to Example 7 may alternatively be combined with each other. To be specific, when the first information includes a plurality of pieces of information in the foregoing at least one piece of information, the first terminal device can finally determine that the first cell is not barred only when it is determined, based on all of the plurality of pieces of information, that the first cell is not barred. For example, when the first information includes the information indicating the one or more frequency bands to which the one or more uplink carriers of the first cell belong, and the first information includes the information indicating the one or more frequency bands to which the one or more downlink carriers of the first cell belong, that the first terminal device determines, based on the first information, that the first cell is not barred includes: The first terminal device determines, based on a fact that the at least one frequency band supported by the first terminal device is included in the one or more frequency bands to which the one or more uplink carriers of the first cell belong and the at least one frequency band supported by the first terminal device is included in the one or more frequency bands to which the one or more downlink carriers of the first cell belong, that the first cell is not barred.

In this embodiment of this application, the following lists several examples of determining, by the first terminal device based on the second information, that the first cell is suitable for camping.

Example 1: The second information includes the information about the public land mobile network of the first cell, and that the first terminal device determines, based on the second information, that the first cell is suitable for camping includes: The first terminal device determines, based on a fact that a public land mobile network supported by the first terminal device is the public land mobile network of the first cell, that the first cell is suitable for camping.

Example 2: The second information includes the information about the standalone non-public network of the first cell, and that the first terminal device determines, based on the second information, that the first cell is suitable for camping includes: The first terminal device determines, based on a fact that a standalone non-public network supported by the first terminal device is the standalone non-public network of the first cell, that the first cell is suitable for camping.

Example 3: The second information includes the indication information used to determine whether the first cell satisfies the cell selection criterion (for example, the cell selection criterion S (cell selection criterion S) described in TS 38.304), and that the first terminal device determines, based on the second information, that the first cell is suitable for camping includes: The first terminal device determines, based on a fact that a cell selection RX level value Srxlev (Cell selection RX level value) of the first cell is greater than 0 and a cell selection quality value Squal (Cell selection quality value) of the first cell is greater than 0, that the first cell is suitable for camping.

It should be understood that the foregoing Example 1 to Example 3 may alternatively be combined with each other. To be specific, when the second information includes a plurality of pieces of information in the foregoing at least one piece of information, the first terminal device can finally determine that the first cell is suitable for camping only when it is determined, based on all of the plurality of pieces of information, that the first cell is suitable for camping. For example, when the second information indicates the information about the public land mobile network of the first cell, and the second information includes the indication information used to determine whether the first cell satisfies the cell selection criterion (for example, the cell selection criterion S (cell selection criterion S) described in TS 38.304), that the first terminal device determines, based on the second information, that the first cell is suitable for camping includes: The first terminal device determines, based on a fact that the public land mobile network supported by the first terminal device is the public land mobile network of the first cell and the cell selection criterion S is satisfied, that the first cell is suitable for camping.

In this embodiment of this application, the following lists several examples of determining, by the first terminal device based on the first information, that the first cell is barred. It should be understood that the first terminal device may determine, based on at least one of the following examples, that the first cell is barred.

Example 1: The first information includes the information indicating the one or more frequency bands to which the one or more uplink carriers of the first cell belong, and that the first terminal device determines, based on the first information, that the first cell is barred includes: The first terminal device determines, based on a fact that all frequency bands supported by the first terminal device do not belong to the one or more frequency bands to which the one or more uplink carriers of the first cell belong, that the first cell is barred. For example, an uplink carrier 1 of the first cell belongs to a frequency band 1, an uplink carrier 2 of the first cell belongs to a frequency band 2, and the frequency bands supported by the first terminal device include frequency bands 4, 5, and 6, in other words, do not include the frequency bands 1 and 2. In this case, the first terminal device may determine that the first cell is barred.

Example 2: The first information includes the information indicating the one or more frequency bands to which the one or more downlink carriers of the first cell belong, and that the first terminal device determines, based on the first information, that the first cell is barred includes: The first terminal device determines, based on a fact that all the frequency bands supported by the first terminal device do not belong to the one or more frequency bands to which the one or more downlink carriers of the first cell belong, that the first cell is barred. For example, a downlink carrier 3 of the first cell belongs to a frequency band 3, a downlink carrier 4 of the first cell belongs to a frequency band 4, and the frequency bands supported by the first terminal device include frequency bands 5 and 6, in other words, do not include the frequency bands 3 and 4. In this case, the first terminal device may determine that the first cell is barred.

Example 3: The first information includes the information indicating the uplink carrier bandwidth of the first cell, and that the first terminal device determines, based on the first information, that the first cell is barred includes: The first terminal device determines, based on a fact that a maximum transmission bandwidth of an uplink channel bandwidth supported by the first terminal device is greater than the uplink carrier bandwidth of the first cell, that the first cell is barred. For example, the maximum transmission bandwidth of the uplink channel bandwidth supported by the first terminal device is 5 MHz, and the uplink carrier bandwidth of the first cell is 4 MHz. In this case, the first terminal device may determine that the first cell is barred.

Example 4: The first information includes the information indicating the bandwidth of the uplink initial BWP of the first cell, and that the first terminal device determines, based on the first information, that the first cell is barred includes: The first terminal device determines, based on a fact that the maximum transmission bandwidth of the uplink channel bandwidth supported by the first terminal device is less than the bandwidth of the uplink initial BWP of the first cell, that the first cell is barred. For example, the maximum transmission bandwidth of the uplink channel bandwidth supported by the first terminal device is 9 MHz, and the bandwidth of the uplink initial BWP of the first cell is 10 MHz. In this case, the first terminal device may determine that the first cell is barred.

Example 5: The first information includes the information indicating the downlink carrier bandwidth of the first cell, and that the first terminal device determines, based on the first information, that the first cell is barred includes: The first terminal device determines, based on a fact that a maximum transmission bandwidth of a downlink channel bandwidth supported by the first terminal device is greater than the downlink carrier bandwidth of the first cell, that the first cell is barred. For example, the maximum transmission bandwidth of the downlink channel bandwidth supported by the first terminal device is 5 MHz, and the downlink carrier bandwidth of the first cell is 4 MHz. In this case, the first terminal device may determine that the first cell is barred.

Example 6: The first information includes the information indicating the bandwidth of the downlink initial BWP of the first cell, and that the first terminal device determines, based on the first information, that the first cell is barred includes: The first terminal device determines, based on a fact that the maximum transmission bandwidth of the downlink channel bandwidth supported by the first terminal device is less than the bandwidth of the uplink initial BWP of the first cell, that the first cell is barred. For example, the maximum transmission bandwidth of the downlink channel bandwidth supported by the first terminal device is 9 MHz, and the bandwidth of the downlink initial BWP of the first cell is 10 MHz. In this case, the first terminal device may determine that the first cell is barred.

Example 7: The first information includes information indicating that the first cell requires the first terminal device not to be capable of performing uplink transmission at the offset of 7.5 kHz relative to the LTE raster (raster), and that the first terminal device determines, based on the first information, that the first cell is barred includes: The first terminal device determines, based on a fact that performing uplink transmission at the offset of 7.5 kHz relative to the LTE raster (raster) is not supported, that the first cell is barred. It should be understood that the first terminal device determines, based on at least one of the foregoing examples, that the first cell is barred.

In this embodiment of this application, the following lists several examples of determining, by the first terminal device based on the second information, that the first cell is not suitable for camping. It should be understood that the first terminal device may determine, based on at least one of the following examples, that the first cell is not suitable for camping.

Example 1: The second information includes the information about the public land mobile network of the first cell, and that the first terminal device determines, based on the second information, that the first cell is not suitable for camping includes: The first terminal device determines, based on a fact that a public land mobile network supported by the first terminal device is not the public land mobile network of the first cell, that the first cell is not suitable for camping.

Example 2: The second information includes the information about the standalone non-public network of the first cell, and that the first terminal device determines, based on the second information, that the first cell is not suitable for camping includes: The first terminal device determines, based on a fact that a standalone non-public network supported by the first terminal device is the standalone non-public network of the first cell, that the first cell is not suitable for camping.

Example 3: The second information includes the indication information used to determine whether the first cell satisfies the cell selection criterion, and that the first terminal device determines, based on the second information, that the first cell is not suitable for camping includes: The first terminal device determines, based on a fact that a cell selection RX level value Srxlev (cell selection RX level value) of the first cell is less than or equal to 0 and/or a cell selection quality value Squal (Cell selection quality value) of the first cell is less than or equal to 0, that the first cell is not suitable for camping.

According to the communication method provided in this embodiment of this application, the first terminal device receives the configuration information that is of the first cell and that is sent by the first network device, and the first terminal device may determine, based on at least one of the first information or the second information included in the configuration information of the first cell, whether to send the first signal used to request the first common signal and/or the second common signal corresponding to the first cell. The first information is used to determine whether the first cell is barred, and the second information is used to determine whether the first cell is suitable for camping. When the first cell is barred and/or the first cell is not suitable for camping, the first signal is not sent. This prevents resource waste that would result from unnecessarily triggering the transmission of the first common signal and/or the second common information of the first cell under such conditions. In other words, the communication method provided in this embodiment of this application helps achieve low carbon and energy saving for a network device.

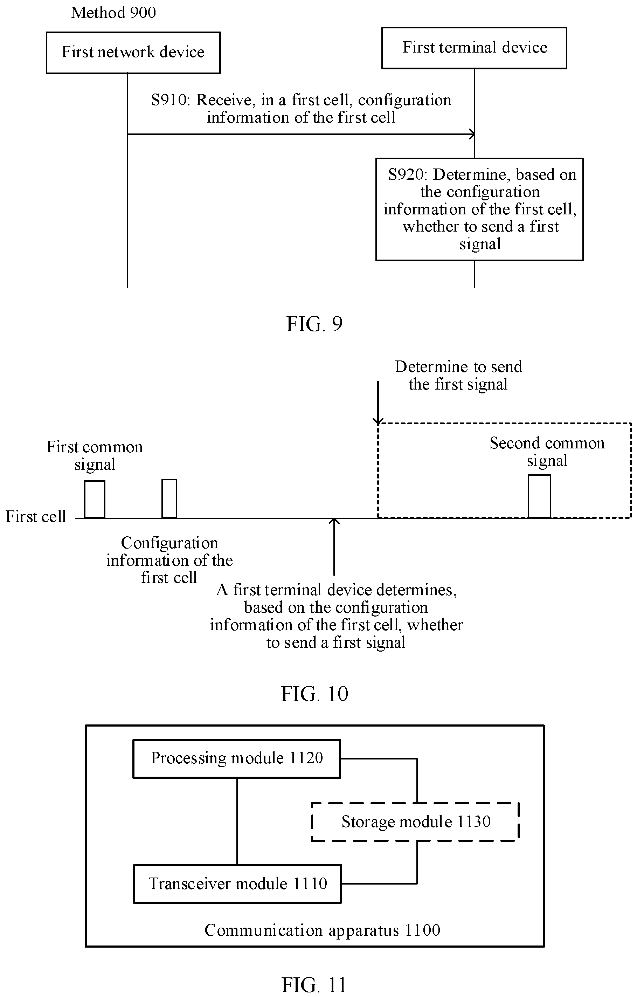

The following describes the communication method provided in embodiments of this application with reference to the embodiment shown in FIG. 3. For details, respectively refer to the embodiments shown in FIG. 4 and FIG. 9.

In a possible implementation, corresponding to a multi-cell scenario, FIG. 4 is a diagram of an example of a communication method according to an embodiment of this application. The method is described by using an example in which a first terminal device interacts with a first network device. Certainly, an action of the first terminal device in the method may alternatively be performed by an apparatus/module in the first terminal device, for example, a chip, a processor, or a processing unit in the first terminal device. An action of the first network device in the method may alternatively be performed by an apparatus/module in the first network device, for example, a chip, a processor, or a processing unit in the network device. This is not specifically limited in embodiments of this application. In this embodiment of this application, processing performed by a single execution body (for example, the first terminal device or the first network device) may alternatively be performed by a plurality of execution bodies, and these execution bodies may be logically and/or physically separated. For example, processing performed by the first network device may be performed by at least one of a CU, a DU, and an RU. For example, as shown in FIG. 4, the method 400 includes the following steps.

S410: The first network device sends configuration information of a first cell to the first terminal device. Correspondingly, the first terminal device receives, in a second cell, the configuration information of the first cell from the first network device.

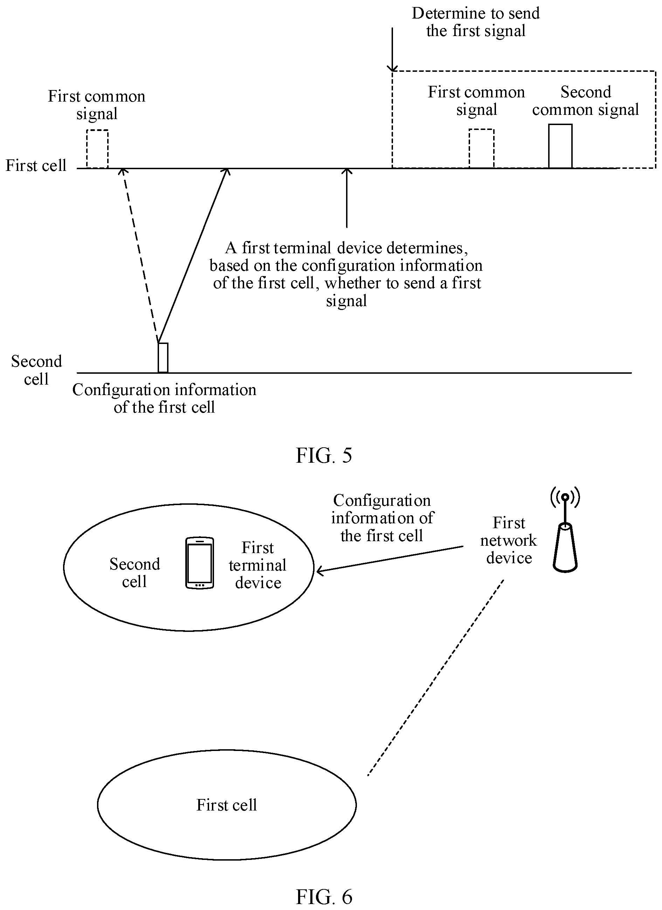

In this embodiment of this application, for related descriptions of the configuration information of the first cell, refer to step S310. Details are not described herein again. In this embodiment of this application, the first terminal device receives, in the second cell, the configuration information of the first cell. For ease of understanding, a diagram in which the first terminal device receives, in the second cell, the configuration information of the first cell as shown in FIG. 5 is provided. The first terminal device receives, in the second cell, the configuration information of the first cell. Further, the first terminal device may determine, based on the configuration information of the first cell, whether to send a first signal.

In this embodiment of this application, the second cell may be a cell currently accessed by the first terminal device, or the second cell may be a cell on which the first terminal device currently camps, or the second cell may be a cell that is found by the first terminal device and that the first terminal device attempts to access or on which the first terminal device attempts to camp, or the second cell may be a cell that is found by the first terminal device and in which the first terminal device attempts to receive a system message on a corresponding frequency domain resource. This is not limited in this embodiment of this application.

For example, the configuration information of the first cell may be included in the system message corresponding to the second cell, or the configuration information of the first cell may be carried in the system message corresponding to the second cell. This is not limited in this embodiment of this application. Optionally, the configuration information of the first cell may be periodically sent. It should be understood that the configuration information of the first cell is (optionally, periodically) sent in the second cell, so that the configuration information of the first cell does not need to be (optionally, periodically) sent in the first cell. This helps achieve energy saving for a network device corresponding to the first cell.

In a possible implementation, both the first cell and the second cell are served by the first network device. It should be understood that, that both the first cell and the second cell are served by the first network device may mean that both the first cell and the second cell are cells served by the first network device. FIG. 6 is a diagram of an example in which a first terminal device receives, in a second cell, configuration information of a first cell. As shown in FIG. 6, both the first cell and the second cell are served by the first network device, a cell currently accessed by the first terminal device is the second cell, and the first terminal device receives, in the second cell, the configuration information of the first cell.

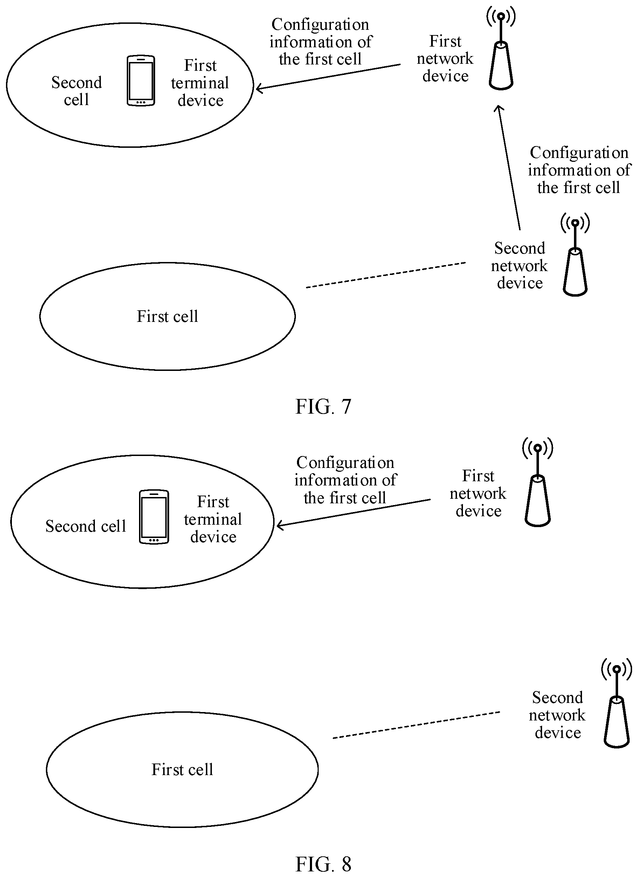

In another possible implementation, the first cell is served by a second network device, and the second cell is served by the first network device. The configuration information of the first cell is obtained by the first network device from the second network device. FIG. 7 is a diagram of another example in which a first terminal device receives, in a second cell, configuration information of a first cell. As shown in FIG. 7, the first cell is served by the second network device, the second cell is served by the first network device, a cell currently accessed by the first terminal device is the second cell, the first network device obtains the configuration information of the first cell from the second network device, and the first terminal device receives, in the second cell, the configuration information of the first cell.

In still another possible implementation, the first cell is served by the second network device, and the second cell is served by the first network device. The configuration information of the first cell is sent by the first network device. It should be understood that the first network device may be a network device with a strong capability, and may generate the configuration information of the first cell. FIG. 8 is a diagram of still another example in which a first terminal device receives, in a second cell, configuration information of a first cell. As shown in FIG. 8, the first cell is served by the second network device, the second cell is served by the first network device, a cell currently accessed by the first terminal device is the second cell, and the first terminal device receives, in the second cell, the configuration information of the first cell.

S420: The first terminal device determines, based on the configuration information of the first cell, whether to send the first signal.

In this embodiment of this application, for that the first terminal device determines, based on the configuration information of the first cell, whether to send the first signal, refer to the description in step S320. Details are not described herein again.

In this embodiment of this application, when the configuration information of the first cell includes first information and second information, the first terminal device first camps on the second cell, or the first terminal device first accesses the second cell. Before sending the first signal to wake up the first cell or requesting a common signal of the first cell, the first terminal device may first obtain, in the second cell, the first information and the second information, and determine, based on the first information and the second information, whether the first cell is barred and whether the first cell is suitable for camping. If the first terminal device determines that the first cell is not barred and the first cell is suitable for camping, the first terminal device wakes up the first cell, or the first terminal device requests transmission of the common signal of the first cell. Then, the first terminal device communicates with the first cell. Otherwise, the first terminal device still camps on the second cell or still accesses the second cell.

In this embodiment of this application, when the configuration information of the first cell includes second information, the first terminal device first camps on the second cell, or the first terminal device first accesses the second cell. Before sending the first signal to wake up the first cell or requesting a common signal of the first cell, the first terminal device may first obtain, in the second cell, the second information, and determine, based on the second information, whether the first cell is suitable for camping. If the first terminal device determines that the first cell is suitable for camping, the first terminal device wakes up the first cell, or the first terminal device requests transmission of the common signal of the first cell. Then, the first terminal device communicates with the first cell. Otherwise, the first terminal device still camps on the second cell or still accesses the second cell.

In this embodiment of this application, when the configuration information of the first cell includes first information, the first terminal device first camps on the second cell, or the first terminal device first accesses the second cell. Before sending the first signal to wake up the first cell or requesting a common signal of the first cell, the first terminal device may first obtain, in the second cell, the first information, and determine, based on the first information, whether the first cell is barred. If the first terminal device determines that the first cell is not barred, the first terminal device wakes up the first cell, or the first terminal device requests transmission of the common signal of the first cell. Then, the first terminal device communicates with the first cell. Otherwise, the first terminal device still camps on the second cell or still accesses the second cell.

According to the communication method provided in this embodiment of this application, the first terminal device receives the configuration information that is of the first cell and that is sent by the first network device, and the first terminal device may determine, based on at least one of the first information or the second information included in the configuration information of the first cell, whether to send the first signal used to request a first common signal and/or a second common signal corresponding to the first cell. The first information is used to determine whether the first cell is barred, and the second information is used to determine whether the first cell is suitable for camping. When the first cell is barred and/or the first cell is not suitable for camping, the first signal is not sent. This prevents resource waste that would result from unnecessarily triggering the transmission of the first common signal and/or the second common information of the first cell under such conditions. In other words, the communication method provided in this embodiment of this application helps achieve low carbon and energy saving for a network device. Further, the configuration information of the first cell is (optionally, periodically) sent in the second cell, so that the configuration information of the first cell does not need to be (optionally, periodically) sent in the first cell. This helps achieve energy saving for the first cell.

In another possible implementation, corresponding to a single-cell scenario, FIG. 9 is a diagram of still another example of a communication method according to an embodiment of this application. The method is described by using an example in which a first terminal device interacts with a first network device. Certainly, an action of the first terminal device in the method may alternatively be performed by an apparatus/module in the first terminal device, for example, a chip, a processor, or a processing unit in the first terminal device. An action of the first network device in the method may alternatively be performed by an apparatus/module in the first network device, for example, a chip, a processor, or a processing unit in the network device. This is not specifically limited in embodiments of this application. In this embodiment of this application, processing performed by a single execution body (for example, the first terminal device or the first network device) may alternatively be performed by a plurality of execution bodies, and these execution bodies may be logically and/or physically separated. For example, processing performed by the first network device may be performed by at least one of a CU, a DU, and an RU. For example, as shown in FIG. 9, the method 900 includes the following steps.

S910: The first network device sends configuration information of a first cell to the first terminal device. Correspondingly, the first terminal device receives, in the first cell, the configuration information of the first cell from the first network device.

In this embodiment of this application, for the configuration information of the first cell, refer to the description in step S310. Details are not described herein again.

In this embodiment of this application, the first terminal device receives, in the first cell, the configuration information of the first cell. For ease of understanding, a diagram in which the first terminal device receives, in the first cell, the configuration information of the first cell as shown in FIG. 10 is provided. The first terminal device receives, in the first cell, the configuration information of the first cell. Further, the first terminal device may determine, based on the configuration information of the first cell, whether to send a first signal.

For example, the configuration information of the first cell is carried in a first message. For example, the first message is periodically sent, for example, the first message is periodically sent on a preconfigured time frequency resource. For example, the first message is related to a first common signal. Optionally, the first message is frequency-division multiplexed with the first common signal. Optionally, the first message is scheduled by using first indication information. In other words, the first indication information indicates a time domain resource and a frequency domain resource that are used for transmission of the first message. The first indication information is carried in the first common signal; or the first indication information is carried in a first physical downlink control channel (physical downlink control channel, PDCCH), and configuration of the first PDCCH is carried in the first common signal.

It should be noted that, when the first message carrying the configuration information of the first cell is related to the first common signal, the first common signal is sent before the first terminal device sends the first signal. In other words, in this case, in the following step S920, the first signal is used to request a second common signal of the first cell.

S920: The first terminal device determines, based on the configuration information of the first cell, whether to send the first signal.

In this embodiment of this application, for step S920, refer to the description in step S320. Details are not described herein again.

According to the communication method provided in this embodiment of this application, the first terminal device receives the configuration information that is of the first cell and that is sent by the first network device, and the first terminal device may determine, based on at least one of first information or second information included in the configuration information of the first cell, whether to send the first signal used to request the first common signal and/or the second common signal of the first cell. The first information is used to determine whether the first cell is barred, and the second information is used to determine whether the first cell is suitable for camping. When the first cell is barred and/or the first cell is not suitable for camping, the first signal is not sent. This prevents resource waste that would result from unnecessarily triggering the transmission of the first common signal and/or the second common information of the first cell under such conditions. In other words, the communication method provided in this embodiment of this application helps achieve low carbon and energy saving for a network device. Further, the configuration information of the first cell is (optionally, periodically) sent in the first cell, so that the first terminal device can obtain the configuration information of the first cell in advance when being not connected to any cell. It should be understood that, during network deployment, a case in which an area is covered by only one cell or carrier may occur. Therefore, for this scenario, a network device needs to provide, in the cell (that is, the first cell), the configuration information of the first cell.

The foregoing mainly describes the solutions provided in embodiments of this application from a perspective of interaction between the first terminal device and the first network device. Correspondingly, an embodiment of this application further provides a communication apparatus. The communication apparatus is configured to implement the foregoing methods. The communication apparatus may be the first terminal device in the foregoing method embodiments, an apparatus including the first terminal device, or a component that can be used in the first terminal device. Alternatively, the communication apparatus may be the first network device in the foregoing method embodiments, an apparatus including the first network device, or a component that can be used in the first network device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented in a form of hardware or a combination of hardware and computer software. Whether a function is executed in a manner of hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

For example, FIG. 11 is a diagram of a communication apparatus according to an embodiment of this application. For example, the communication apparatus is the first terminal device (which may be a chip of the first terminal device, a module of the first terminal device, or an internal apparatus of the first terminal device) in the foregoing method embodiments. The first terminal device includes a transceiver module 1110 and a processing module 1120. The transceiver module 1110 may also be referred to as a transceiver unit, and is configured to implement a transceiver function. For example, the transceiver module 1110 may be a transceiver circuit, a transceiver machine, a transceiver, or a communication interface.

In this embodiment of this application, the transceiver module 1110 is configured to receive configuration information of a first cell.

In this embodiment of this application, the processing module 1120 is configured to determine, based on the configuration information of the first cell, whether to send a first signal, where the first signal is used to request a first common signal and/or a second common signal of the first cell.

In a possible implementation, the configuration information of the first cell includes first information and second information, the first information is used to determine whether the first cell is barred, and the second information is used to determine whether the first cell is suitable for camping.

In this embodiment of this application, that the processing module 1120 determines, based on the configuration information of the first cell, whether to send the first signal includes: The processing module 1120 determines to send the first signal when it is determined, based on the first information, that the first cell is not barred, and it is determined, based on the second information, that the first cell is suitable for camping.

In this embodiment of this application, the first information includes at least one of the following: information indicating one or more frequency bands to which one or more downlink carriers of the first cell belong; information indicating one or more frequency bands to which one or more uplink carriers of the first cell belong; information indicating an uplink carrier bandwidth of the first cell; information indicating a bandwidth of an uplink initial BWP of the first cell; information indicating a downlink carrier bandwidth of the first cell; information indicating a bandwidth of a downlink initial BWP of the first cell; and information indicating that the first cell requires the first terminal device to be capable of performing uplink transmission at an offset of 7.5 kHz relative to a long term evolution LTE raster (raster).

In this embodiment of this application, the first information includes the information indicating the one or more frequency bands to which the one or more downlink carriers of the first cell belong, and that the processing module 1120 determines, based on the first information, that the first cell is not barred includes: The processing module 1120 determines, based on a fact that at least one supported frequency band belongs to the one or more frequency bands to which the one or more downlink carriers of the first cell belong, that the first cell is not barred.

In this embodiment of this application, the first information includes the information indicating the one or more frequency bands to which the one or more uplink carriers of the first cell belong, and that the processing module 1120 determines, based on the first information, that the first cell is not barred includes: The processing module 1120 determines, based on a fact that at least one supported frequency band belongs to the one or more frequency bands to which the one or more uplink carriers of the first cell belong, that the first cell is not barred.

In this embodiment of this application, the first information includes the information indicating the uplink carrier bandwidth of the first cell, and that the processing module 1120 determines, based on the first information, that the first cell is not barred includes: The processing module 1120 determines, based on a fact that a maximum transmission bandwidth of a supported uplink channel bandwidth is less than or equal to the uplink carrier bandwidth of the first cell, that the first cell is not barred.

In this embodiment of this application, the first information includes the information indicating the bandwidth of the uplink initial BWP of the first cell, and the processing module 1120 determines, based on the first information, that the first cell is not barred includes: The processing module 1120 determines, based on a fact that the maximum transmission bandwidth of the supported uplink channel bandwidth is greater than or equal to the bandwidth of the uplink initial BWP of the first cell, that the first cell is not barred.

In this embodiment of this application, the first information includes the information indicating the downlink carrier bandwidth of the first cell, and that the processing module 1120 determines, based on the first information, that the first cell is not barred includes: The processing module 1120 determines, based on a fact that a maximum transmission bandwidth of a supported downlink channel bandwidth is less than or equal to the downlink carrier bandwidth of the first cell, that the first cell is not barred.

In this embodiment of this application, the first information includes the information indicating the bandwidth of the downlink initial BWP of the first cell, and the processing module 1120 determines, based on the first information, that the first cell is not barred includes: The processing module 1120 determines, based on a fact that the maximum transmission bandwidth of the supported uplink channel bandwidth is greater than or equal to the bandwidth of the uplink initial BWP of the first cell, that the first cell is not barred.

In this embodiment of this application, the first information includes the information indicating that the first cell requires the first terminal device to be capable of performing uplink transmission at the offset of 7.5 kHz relative to the long term evolution LTE raster (raster), and that the processing module 1120 determines, based on the first information, that the first cell is not barred includes: The processing module 1120 determines, based on a fact that performing uplink transmission at the offset of 7.5 kHz relative to the long term evolution LTE raster (raster) is supported, that the first cell is not barred.

In another possible implementation, the configuration information of the first cell includes second information, and the second information is used to determine whether the first cell is suitable for camping.

In this embodiment of this application, that the processing module 1120 determines, based on the configuration information of the first cell, whether to send the first signal includes: The processing module 1120 determines to send the first signal when it is determined, based on the second information, that the first cell is suitable for camping.

In this embodiment of this application, the second information includes at least one of the following: information about a public land mobile network of the first cell; information about a standalone non-public network of the first cell; and indication information used to determine whether the first cell satisfies a cell selection criterion. In this way, the first terminal device can determine, based on the second information, whether the first cell is suitable for camping.

In this embodiment of this application, the second information includes the information about the public land mobile network of the first cell, and that the processing module 1120 determines, based on the second information, that the first cell is suitable for camping includes: The processing module 1120 determines, based on a fact that a supported public land mobile network is the public land mobile network of the first cell, that the first cell is suitable for camping.

In this embodiment of this application, the second information includes the information about the standalone non-public network of the first cell, and that the processing module 1120 determines, based on the second information, that the first cell is suitable for camping includes: The processing module 1120 determines, based on a fact that a supported standalone non-public network is the standalone non-public network of the first cell, that the first cell is suitable for camping.

In this embodiment of this application, the second information includes the indication information used to determine whether the first cell satisfies the cell selection criterion, and that the processing module 1120 determines, based on the second information, that the first cell is suitable for camping includes: The processing module 1120 determines, based on a fact that a cell selection RX level value Srxlev of the first cell is greater than 0 and that a cell selection quality value Squal of the first cell is greater than 0, that the first cell is suitable for camping.

In some embodiments, that the transceiver module 1110 receives the configuration information of the first cell includes: The transceiver module 1110 receives, in a second cell, the configuration information of the first cell.

In this embodiment of this application, the configuration information of the first cell is included in a system message corresponding to the second cell.

In a possible implementation, both the first cell and the second cell are served by a first network device.

In another possible implementation, the first cell is served by a second network device, and the second cell is served by the first network device. The configuration information of the first cell is obtained by the first network device from the second network device; or the configuration information of the first cell is sent by the first network device.

In some embodiments, that the transceiver module 1110 receives the configuration information of the first cell includes: The transceiver module 1110 receives, in the first cell, the configuration information of the first cell.

For example, the configuration information of the first cell is carried in a first message, where the first message is periodically sent; or the first message is frequency-division multiplexed with the first common signal; or the first message is scheduled by using first indication information, where the first indication information is carried in the first common signal; or the first indication information is carried in a first physical downlink control channel PDCCH, and configuration of the first PDCCH is carried in the first common signal.

In this embodiment of this application, the first common signal and/or the second common signal include/includes the configuration information of the first cell, and the first common signal and/or the second common signal further include/includes at least one of the following: scheduling information of other system information, counter configuration information, access control restriction information, and terminal resume identifier indication.

All related content of the steps in the foregoing method embodiments may be cited in function descriptions of corresponding functional modules. Details are not described herein again. Optionally, the communication apparatus may further include a storage module 1130. The storage module 1130 may be configured to store instructions and/or data. The processing module 1120 may read the instructions and/or the data in the storage module 1130.

In this embodiment of this application, the first terminal device is presented in a form of functional modules obtained through division in an integrated manner. The "module" herein may be a specific ASIC, a circuit, a processor that executes one or more software or firmware programs, a memory, an integrated logic circuit, and/or another device that can provide the foregoing functions. In a simple embodiment, a person skilled in the art may figure out that the first terminal device may be in a form of the communication apparatus 200 shown in FIG. 2.

For example, the processor 201 in the communication apparatus 200 shown in FIG. 2 may invoke the computer-executable instructions stored in the memory 203, so that the communication apparatus 200 performs the communication method in the foregoing method embodiments.

Specifically, functions/implementation processes of the transceiver module 1110 and the processing module 1120 in FIG. 11 may be implemented by the processor 201 in the communication apparatus 200 shown in FIG. 2 by invoking the computer-executable instructions stored in the memory 203. Alternatively, a function/an implementation process of the processing module 1120 in FIG. 11 may be implemented by the processor 201 in the communication apparatus 200 shown in FIG. 2 by invoking the computer-executable instructions stored in the memory 203, and a function/an implementation process of the transceiver module 1110 in FIG. 11 may be implemented through the communication interface 204 in the communication apparatus 200 shown in FIG. 2.

The first terminal device (which may be a chip of the first terminal device, a module of the first terminal device, or an internal apparatus of the first terminal device) provided in this embodiment of this application may perform the foregoing communication method. Therefore, for technical effects that can be achieved by the first terminal device, refer to the foregoing method embodiments. Details are not described herein again.

Alternatively, for example, the communication apparatus is the first network device (which may be a chip of the first network device, a module of the first network device, or an internal apparatus of the first network device) in the foregoing method embodiments. The first network device includes a transceiver module 1110 and a processing module 1120. The transceiver module 1110 may also be referred to as a transceiver unit, and is configured to implement a transceiver function. For example, the transceiver module 1110 may be a transceiver circuit, a transceiver machine, a transceiver, or a communication interface.

In this embodiment of this application, the transceiver module 1110 is configured to send configuration information of a first cell, where the configuration information of the first cell includes first information and second information, or the configuration information of the first cell includes the second information. The first information is used to determine whether the first cell is barred, and the second information is used to determine whether the first cell is suitable for camping. The first network device receives a first signal, where the first signal is used to request a first common signal and/or a second common signal of the first cell.

In this embodiment of this application, the transceiver module 1110 is further configured to send the first common signal and/or the second common signal of the first cell. In this embodiment of this application, the first information includes at least one of the following: information indicating one or more frequency bands to which one or more downlink carriers of the first cell belong; information indicating one or more frequency bands to which one or more uplink carriers of the first cell belong; information indicating an uplink carrier bandwidth of the first cell; information indicating a downlink carrier bandwidth of the first cell; and information indicating that the first terminal device can perform uplink transmission at an offset of 7.5 kHz relative to a long term evolution LTE raster (raster).

In this embodiment of this application, the second information includes at least one of the following: information about a public land mobile network of the first cell; information about a standalone non-public network of the first cell; and indication information used to determine whether the first cell satisfies a cell selection criterion.

In a possible implementation, the configuration information of the first cell is included in a system message corresponding to a second cell. Both the first cell and the second cell are served by the first network device.

In another possible implementation, the first cell is served by a second network device, and the second cell is served by the first network device. In this embodiment of this application, the transceiver module 1110 is configured to receive the configuration information of the first cell from the second network device.

In still another possible implementation, the configuration information of the first cell is carried in a first message, where the first message is periodically sent; or the first message is frequency-division multiplexed with the first common signal; or the first message is scheduled by using first indication information, where the first indication information is carried in the first common signal; or the first indication information is carried in a first physical downlink control channel PDCCH, and configuration of the first PDCCH is carried in the first common signal.

In this embodiment of this application, the first common signal and/or the second common signal include/includes the configuration information of the first cell, and the first common signal and/or the second common signal further include/includes at least one of the following: scheduling information of other system information, counter configuration information, access control restriction information, and terminal resume identifier indication.

All related content of the steps in the foregoing method embodiments may be cited in function descriptions of corresponding functional modules. Details are not described herein again. Optionally, the communication apparatus may further include a storage module 1130. The storage module 1130 may be configured to store instructions and/or data. The processing module 1120 may read the instructions and/or the data in the storage module 1130.

In this embodiment of this application, the first network device is presented in a form of functional modules obtained through division in an integrated manner. The "module" herein may be a specific ASIC, a circuit, a processor that executes one or more software or firmware programs, a memory, an integrated logic circuit, and/or another device that can provide the foregoing functions. In a simple embodiment, a person skilled in the art may figure out that the first network device may be in a form of the communication apparatus 200 shown in FIG. 2.

For example, the processor 201 in the communication apparatus 200 shown in FIG. 2 may invoke the computer-executable instructions stored in the memory 203, so that the communication apparatus 200 performs the communication method in the foregoing method embodiments.

Specifically, functions/implementation processes of the transceiver module 1110 and the processing module 1120 in FIG. 11 may be implemented by the processor 201 in the communication apparatus 200 shown in FIG. 2 by invoking the computer-executable instructions stored in the memory 203. Alternatively, a function/an implementation process of the processing module 1120 in FIG. 11 may be implemented by the processor 201 in the communication apparatus 200 shown in FIG. 2 by invoking the computer-executable instructions stored in the memory 203, and a function/an implementation process of the transceiver module 1110 in FIG. 11 may be implemented through the communication interface 204 in the communication apparatus 200 shown in FIG. 2.

The first network device (which may be a chip of the first network device, a module of the first network device, or an internal apparatus of the first network device) provided in this embodiment of this application may perform the foregoing communication method. Therefore, for technical effects that can be achieved by the first network device, refer to the foregoing method embodiments. Details are not described herein again.

It should be understood that one or more of the foregoing modules or units may be implemented by software, hardware, or a combination thereof. When any one of the foregoing modules or units is implemented by software, the software exists in a form of computer program instructions, and is stored in a memory. A processor may be configured to execute the program instructions and implement the foregoing method procedures. The processor may be built into a SoC (system on chip) or an ASIC, or may be an independent semiconductor chip. In addition to a core configured to perform operations or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, the memory may alternatively not be in the communication apparatus. When the communication apparatus is a chip system, the communication apparatus may include a chip, or may include a chip and another discrete device. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is caused to perform the method according to any one of the foregoing method embodiments or any implementation thereof.

Optionally, an embodiment of this application further provides a communication system. The communication system includes the first network device in the foregoing method embodiments and the first terminal device in the foregoing method embodiments.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or step, and "a" or "one" does not exclude a case of plurality. A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to them without departing from the spirit and scope of this application. Correspondingly, the specification and the accompanying drawings are merely example descriptions of this application defined by the appended claims, and are considered as covering any of or all modifications, variations, combinations, or equivalents within the scope of this application. It is clear that a person skilled in the art can make various modifications and variations to this application without departing from the spirit and scope of this application. This application is intended to cover these modifications and variations of this application provided that these modifications and variations fall within the scope of the claims of this application and their equivalent technologies.

## Claims

1. A communication method, applied to a first terminal device and comprising:
receiving configuration information of a first cell; and
determining, based on the configuration information of the first cell, whether to send a first signal, wherein the first signal is used to request a first common signal and/or a second common signal of the first cell.

2. The method according to claim 1, wherein the configuration information of the first cell comprises first information and second information, the first information is used to determine whether the first cell is barred, and the second information is used to determine whether the first cell is suitable for camping.

3. The method according to claim 2, wherein the determining, based on the configuration information of the first cell, whether to send the first signal comprises:
determining to send the first signal when it is determined, based on the first information, that the first cell is not barred, and it is determined, based on the second information, that the first cell is suitable for camping.

4. The method according to claim 1, wherein the configuration information of the first cell comprises second information, and the second information is used to determine whether the first cell is suitable for camping.

5. The method according to claim 4, wherein the determining, based on the configuration information of the first cell, whether to send the first signal comprises:
determining to send the first signal when it is determined, based on the second information, that the first cell is suitable for camping.

6. The method according to claim 3, wherein the first information comprises at least one of the following:
information indicating one or more frequency bands to which one or more downlink carriers of the first cell belong;
information indicating one or more frequency bands to which one or more uplink carriers of the first cell belong;
information indicating an uplink carrier bandwidth of the first cell;
information indicating a bandwidth of an uplink initial BWP of the first cell;
information indicating a downlink carrier bandwidth of the first cell;
information indicating a bandwidth of a downlink initial BWP of the first cell; and
information indicating that the first cell requires the first terminal device to be capable of performing uplink transmission at an offset of 7.5 kHz relative to a long term evolution LTE raster (raster).

7. The method according to claim 6, wherein the determining, based on the first information, that the first cell is not barred comprises at least one of the following:
the first information comprises the information indicating the one or more frequency bands to which the one or more downlink carriers of the first cell belong, and the determining, based on the first information, that the first cell is not barred comprises:
determining, based on a fact that at least one frequency band supported by the first terminal device belongs to the one or more frequency bands to which the one or more downlink carriers of the first cell belong, that the first cell is not barred;
the first information comprises the information indicating the one or more frequency bands to which the one or more uplink carriers of the first cell belong, and the determining, based on the first information, that the first cell is not barred comprises:
determining, based on a fact that at least one frequency band supported by the first terminal device belongs to the one or more frequency bands to which the one or more uplink carriers of the first cell belong, that the first cell is not barred;
the first information comprises the information indicating the uplink carrier bandwidth of the first cell, and the determining, based on the first information, that the first cell is not barred comprises:
determining, based on a fact that a maximum transmission bandwidth of an uplink channel bandwidth supported by the first terminal device is less than or equal to the uplink carrier bandwidth of the first cell, that the first cell is not barred;
the first information comprises the information indicating the bandwidth of the uplink initial BWP of the first cell, and the determining, based on the first information, that the first cell is not barred comprises:
determining, based on a fact that a maximum transmission bandwidth of an uplink channel bandwidth supported by the first terminal device is greater than or equal to the bandwidth of the uplink initial BWP of the first cell, that the first cell is not barred;
the first information comprises the information indicating the downlink carrier bandwidth of the first cell, and the determining, based on the first information, that the first cell is not barred comprises:
determining, based on a fact that a maximum transmission bandwidth of a downlink channel bandwidth supported by the first terminal device is less than or equal to the downlink carrier bandwidth of the first cell, that the first cell is not barred;
the first information comprises the information indicating the bandwidth of the downlink initial BWP of the first cell, and the determining, based on the first information, that the first cell is not barred comprises:
determining, based on a fact that a maximum transmission bandwidth of an uplink channel bandwidth supported by the first terminal device is greater than or equal to the bandwidth of the uplink initial BWP of the first cell, that the first cell is not barred; and
the first information comprises the information indicating that the first cell requires the first terminal device to be capable of performing uplink transmission at the offset of 7.5 kHz relative to the long term evolution LTE raster (raster), and the determining, based on the first information, that the first cell is not barred comprises:
determining, based on a fact that the first terminal device supports performing uplink transmission at the offset of 7.5 kHz relative to the long term evolution LTE raster (raster), that the first cell is not barred.

8. The method according to claim 3 or 5, wherein the second information comprises at least one of the following:
information about a public land mobile network of the first cell;
information about a standalone non-public network of the first cell; and
indication information used to determine whether the first cell satisfies a cell selection criterion.

9. The method according to claim 8, wherein the determining, based on the second information, that the first cell is suitable for camping comprises at least one of the following:
the second information comprises the information about the public land mobile network of the first cell, and the determining, based on the second information, that the first cell is suitable for camping comprises:
determining, based on a fact that a public land mobile network supported by the first terminal device is the public land mobile network of the first cell, that the first cell is suitable for camping;
the second information comprises the information about the standalone non-public network of the first cell, and the determining, based on the second information, that the first cell is suitable for camping comprises:
determining, based on a fact that a standalone non-public network supported by the first terminal device is the standalone non-public network of the first cell, that the first cell is suitable for camping; and
the second information comprises the indication information used to determine whether the first cell satisfies the cell selection criterion, and the determining, based on the second information, that the first cell is suitable for camping comprises:
determining, based on a fact that a cell selection RX level value Srxlev of the first cell is greater than 0 and that a cell selection quality value Squal of the first cell is greater than 0, that the first cell is suitable for camping.

10. The method according to any one of claims 1 to 9, wherein the receiving the configuration information of the first cell comprises:
receiving, in a second cell, the configuration information of the first cell.

11. The method according to claim 10, wherein the configuration information of the first cell is comprised in a system message of the second cell.

12. The method according to claim 10 or 11, wherein both the first cell and the second cell are served by a first network device.

13. The method according to claim 10 or 11, wherein the first cell is served by a second network device, and the second cell is served by a first network device.

14. The method according to claim 13, wherein the configuration information of the first cell is obtained by the first network device from the second network device; or
the configuration information of the first cell is sent by the first network device.

15. The method according to any one of claims 1 to 9, wherein the receiving the configuration information of the first cell comprises:
receiving, in the first cell, the configuration information of the first cell.

16. The method according to claim 15, wherein the configuration information of the first cell is carried in a first message, wherein
the first message is periodically sent; or
the first message is frequency-division multiplexed with the first common signal; or
the first message is scheduled by using first indication information, wherein the first indication information is carried in the first common signal; or the first indication information is carried in a first physical downlink control channel PDCCH, and configuration of the first PDCCH is carried in the first common signal.

17. The method according to any one of claims 1 to 16, wherein the first common signal and/or the second common signal comprise/comprises the configuration information of the first cell, and the first common signal and/or the second common signal further comprise/comprises at least one of the following: scheduling information of other system information, counter configuration information, access control restriction information, and terminal resume identifier indication.

18. A communication system, comprising a first terminal device and a first network device, wherein
the first network device is configured to send configuration information of a first cell to the first terminal device; and
the first terminal device is configured to receive the configuration information of the first cell from the first network device, and determine, based on the configuration information of the first cell, whether to send a first signal, wherein
the first signal is used to request a first common signal and/or a second common signal of the first cell.

19. The communication system according to claim 18, wherein that the first terminal device is configured to receive the configuration information of the first cell comprises:
the first terminal device is configured to receive, in a second cell, the configuration information of the first cell.

20. The communication system according to claim 19, wherein the configuration information of the first cell is comprised in a system message corresponding to the second cell.

21. The communication system according to claim 19 or 20, wherein both the first cell and the second cell are served by the first network device.

22. The communication system according to claim 19 or 20, further comprising a second network device, wherein the first cell is served by the second network device, and the second cell is served by the first network device.

23. The communication system according to claim 22, wherein the second network device is configured to send the configuration information of the first cell to the first network device; and
the first network device is configured to receive the configuration information of the first cell from the second network device.

24. The communication system according to claim 18, wherein that the first terminal device is configured to receive the configuration information of the first cell comprises:
the first terminal device is configured to receive, in the first cell, the configuration information of the first cell.

25. The communication system according to claim 24, wherein the configuration information of the first cell is carried in a first message, wherein
the first message is periodically sent; or
the first message is frequency-division multiplexed with the first common signal; or
the first message is scheduled by using first indication information, wherein the first indication information is carried in the first common signal; or the first indication information is carried in a first physical downlink control channel PDCCH, and configuration of the first PDCCH is carried in the first common signal.

26. The communication system according to any one of claims 18 to 25, wherein when the first common signal and/or the second common signal comprise/comprises the configuration information of the first cell, the communication system further comprises at least one of the following: a second terminal device, wherein the second terminal device is configured to: receive the first common signal and/or the second common signal from the first network device, and access the first cell based on the first common signal and/or the second common signal.

27. A communication apparatus, comprising:
a transceiver module, configured to receive configuration information of a first cell; and
a processing module, configured to determine, based on the configuration information of the first cell, whether to send a first signal, wherein the first signal is used to request a first common signal and/or a second common signal of the first cell.

28. A communication apparatus, comprising a module configured to perform the method according to any one of claims 1 to 17.

29. A computer-readable storage medium, comprising instructions, wherein when the instructions are run, the method according to any one of claims 1 to 17 is implemented.

30. A computer program product, comprising instructions, wherein when the instructions are run, the method according to any one of claims 1 to 17 is implemented.
